# EUROPEAN PATENT SPECIFICATION

(11) **EP 1 784 727 B1**
(45) Date of publication and mention of the grant of the patent: **08.05.2019**
(21) Application number: 05791686.8
(22) Date of filing: 26.08.2005
(51) Int. Cl.: G06F 11/14, G06F 11/20

(54) **METHOD AND SYSTEM FOR PROVIDING TRANSPARENT INCREMENTAL AND MULTIPROCESS CHECK-POINTING TO COMPUTER APPLICATIONS**
VERFAHREN UND SYSTEM ZUR BEREITSTELLUNG VON TRANSPARENTEM INKREMENTELLEM UND MEHRPROZESS-CHECKPOINTING FÜR COMPUTERANWENDUNGEN
PROCEDE ET SYSTEME PERMETTANT DE FOURNIR LA CREATION TRANSPARENTE DE POINTS DE REPRISE INCREMENTIELS ET MULTIPROCESSUS A DES APPLICATIONS INFORMATIQUES

(30) Priority: 26.08.2004 US 605026
(43) Date of publication of application: 16.05.2007
(73) Proprietor: Red Hat, Inc., Raleigh NC 27606 (US)
(72) Inventor: NEARY, Michael, Oliver, Kirkland, WA 98033 (US); WASON, Ashwani, San Jose, CA 95138 (US); GULATI, Shvetima, San Jose, CA 95134 (US); FERVAL, Fabrice, Seattle, WA 98103 (US)
(74) Representative: Papula Oy
(86) International application number: PCT/US2005/030354
(87) International publication number: WO 2006/026403

(56) References cited:
- WO-A2-2004/015574
- GB-A- 2 362 246
- US-A1- 2005 251 785
- SAURABH AGARWAL ET AL: "Adaptive incremental checkpointing for massively parallel systems", PROCEEDINGS OF THE 18TH ANNUAL INTERNATIONAL CONFERENCE ON SUPERCOMPUTING , ICS '04, 26 June 2004 (2004-06-26), - 1 July 2004 (2004-07-01), page 277, XP055118894, New York, New York, USA DOI: 10.1145/1006209.1006248 ISBN: 978-1-58-113839-9
- Junyoung Heo ET AL: "AN EFFICIENT MERGING ALGORITHM FOR RECOVERY AND GARBAGE COLLECTION IN INCREMENTAL CHECKPOINTING", Proc. IASTED Int. Conf. PARALLEL AND DISTRIBUTED COMPUTING AND NETWORKS, 17 February 2004 (2004-02-17), pages 364-368, XP055127412, Innsbruck, Austria Retrieved from the Internet: URL:http://embedded.dankook.ac.kr/~choijm/ paper/2004_Merging_IASTED.pdf [retrieved on 2014-07-08]
- RUSSINOVICH M ET AL: "Application-transparent checkpointing in Mach 3.O/UX", SYSTEM SCIENCES. VOL. II., PROCEEDINGS OF THE TWENTY-EIGHTH HAWAII INT ERNATIONAL CONFERENCE ON WAILEA, HI, USA 3-6 JAN. 1995, LOS ALAMITOS, CA, USA,IEEE COMPUT. SOC, 3 January 1995 (1995-01-03), pages 114-123, XP010128210, DOI: 10.1109/HICSS.1995.375403 ISBN: 978-0-8186-6930-9
- HYOCHANG NAM: 'Probabilistic Checkpointing' IEICE TRANS. INF. & SYST. vol. E85-D, no. 7, July 2002, pages 1 - 12, XP008117604
- JOSE CARLOS SANCHO: 'On the Feasibility of Incremental Checkpointing For Scientific Computing' IEEE, PROCEEDINGS OF THE 18TH INTERNATIONAL PARALLEL AND DISTRIBUTED PROCESSING April 2004, page 3, XP008117608

## Description

### BACKGROUND OF THE INVENTION

### 1. Field of the Invention

This invention pertains generally to enterprise computer systems, embedded computer systems, and computer systems in general, and more particularly to transparent multiprocess checkpointing and automatic restoration for computer applications.

### 2. Description of Related Art

In a number of settings high availability service for complex computer applications is a necessary and nonnegotiable requirement. For example, high availability scenarios include the case of Internet and corporate data centers, financial services, telecommunications, government systems and medical systems.

Providing high availability service generally requires that in the case that an application executing on a first server encounters a failure, for any of a number of reasons, application execution continues automatically on a second server that continues to interact with the client system in response to execution of a failover process. The effort involved in achieving such availability and reliability can be one of the most expensive and time- consuming aspects of application development and can even result in delays in deploying an application.

Therefore, there is a need for methods, systems and procedures for achieving high availability and reliability through a cost-effective, easy-to-use software infrastructure, rather than through prolonged custom coding, lengthy development time and substantial expenditure.

Checkpointing is an integral part of high availability which provides for the capture of the complete state of an application process (i.e., periodically), including, but not limited to, its memory pages, stack contents, open files, sockets, pipes, and other state information that is for instance retained in the kernel on behalf of the process. Later on, the application can be restored in the same state as it was when the checkpoint was taken, even when the restoration is performed on a different computer system.

Traditionally, the problem of saving the state of an application has been approached from within the application, taking advantage of its full knowledge of application internals, data structures, and semantics. However, this approach is highly intrusive, since the application code itself needs to be modified to operate in the desired high availability manner.

Accordingly, checkpointing has been used in various varieties over the years, and more recently, lower level transparent checkpointing has been described using checkpointing software forming a layer between the application and the operating system. For example, William R. Dieter and James E. Lumpp, "User-level Checkpointing for LinuxThreads Programs", In Proceedings of the FREE NIX Track: 2001 USENIXAnnual Technical Conference, pp. 81-92, June 2001, attached hereto as Appendix A, describe a user-level checkpointing library for single-process multi-threaded applications.

WO 2004/015574 A2 discloses a method for replicating a software application in a multi-computer architecture (cluster). Said software application is executed on a first computer of said cluster, which represents a primary or operational node, and is replicated on at least one other computer of the cluster, which represents a secondary node, comprising replication of the resources associated with said software application. The method comprises streamlined updating of the replicated resources by means of a dynamic introspection mechanism supplying the structure of the application that is to be replicated and the dynamic graph of the implemented resources and dependencies.

SAURABH AGARWAL ET: "Adaptive incremental checkpointing for massively parallel systems", PROCEEDINGS OF THE 18TH ANNUAL INTERNATIONAL CONFERENCE ON SUPERCOMPUTING, ICS 2=04, 26 June 2004 (2004-06-26), - 1 July 2004 (2004-07 -01), page 277, teaches an adaptive hash-based incremental checkpoint technique (AIC), which dynamically partitions the application memory into variable sized blocks such that the checkpoint overheads are minimized.

Junyoung Heo ET AL: AN EFFICIENT MERGINGALGORITHM FOR RECOVERY AND GARBAGE COLLECTION IN INCREMENTAL CHECKPOINTING", Proc. IASTED Int. Conf. PARALLEL AND DISTRIBUTED COMPUTING AND NETWORKS, 17 February 2004 (2004-02-17), pages 364-368, teaches an efficient merging algorithm for the recovery and garbage collection in incremental checkpointing. The proposed algorithm can merge several incremental checkpoints into a full checkpoint for recovery and can delete unnecessary incremental checkpoints.

GB 2 362 246 A discloses solution where, when a file is accessed in a computer system provided with a checkpoint facility, a determination is made as to whether the access occurs subsequent to the checkpoint process and whether the accessed file has not been saved. If it is determined that the access occurs subsequent to the checkpoint process and the accessed file has not been saved, the accessed file is appended to the saved information.

However, these checkpointing mechanisms are not amenable for use with high availability services for most applications and suffer from a number of drawbacks. Current forms of checkpointing either require modifications to the application and are thus not transparent, or only work for single-process applications, and do not support transparent incremental checkpointing

The present invention overcomes these shortcomings and provides transparent incremental and multiprocess checkpointing based on a user-level library and a loadable kernel module.

### BRIEF SUMMARY OF THE INVENTION

The invention is characterized by features described in the independent claims 1, 10 and 19 and their dependent claims.

In one example, there may be provided a method and system to transparently checkpoint and restore a computer application program, which may comprise one or more distinct computer processes. Each of these processes may be single-threaded or multi-threaded. Transparency in this context means that the application program need neither be modified in any way, nor be recompiled or re-linked.

Checkpoints may either be taken as full or incremental checkpoints. In the former case, a single checkpoint is sufficient to restore the whole application, whereas in the latter case, only the differences between two checkpoints are saved and subsequently applied to a previous full checkpoint.

In one example, there may be provided a user-level programming library may be applied that can be pre-loaded into the application's address space, plus a loadable kernel module (LKM) that is used to capture and restore the state that is kept in operating system kernel space on behalf of the application.

In various examples of the invention, features are provided that are useful for applications that must be highly available, including but not limited to:
(a) Powerful and transparent checkpointing;
(b) Checkpointing of single-threaded and multi-threaded application processes;
(c) Checkpointing of daemonized multi-process applications;
(d) Checkpointing of general multi-process applications; and
(e) Full and incremental checkpointing.

In one example, there may be provided a method, system, improvement and/or computer program are described for creating incremental checkpoints; creating full checkpoints; and providing for automatic asynchronous merging of incremental checkpoints with full checkpoints at a checkpoint storage location; wherein at least said incremental checkpointing is implemented in user space; and wherein at least said incremental checkpointing comprises page-boundary memory checkpointing. In one embodiment, file storage checkpointing is provided wherein one or more files for an application program can be restored without requiring restoration of files for other application programs. In another embodiment, barrier synchronization using system semaphores is employed. In another embodiment, checkpointing is implemented using a device driver in lieu of operating system kernel modification. In another mode, the state of waiting queues is captured using kernel-level interception of system calls. In one embodiment, the interception is implemented in a kernel module in a multiprocessing environment. In another embodiment, the interception is implemented without a kernel module in a single processing environment.

In one example, there may be provided a checkpointing method, system, improvement and/or computer program for checkpointing memory images of processes and data for restoration of the entire process tree/hierarchy. In one mode, the processes can be multithreaded. In another mode, the processes can be single-threaded. In one embodiment, one or more portions of the tree/hierarchy are restorable based on priority of application programs or processes. In one embodiment, the checkpointing is implemented using a device driver in lieu of operating system kernel modification. In another mode, the state of waiting queues is captured using kernel-level interception of system calls. In one mode, the interception is implemented in a kernel module in a multiprocessing environment. In another mode, the interception is implemented without a kernel module in a single processing environment.

In one example, there may be provided a checkpointing method, system, improvement and/or computer program for checkpointing memory images of processes and data for restoration of only the first or second level of the process tree. In one mode, the processes can be multi-threaded. In another mode, the processes can be single threaded. In one embodiment, the checkpointing is implemented using a device driver in lieu of operating system kernel modification. In another mode, the state of waiting queues is captured using kernel-level interception of system calls. In one mode, the interception is implemented in a kernel module in a multiprocessing environment. In another mode, the interception is implemented without a kernel module in a single processing environment.

In one example, there may be provided a method, system, improvement and/or computer program is provided for checkpointing user-space application memory images and the state that the operating system maintains on behalf of the application. In one embodiment, the checkpointing runs entirely in user space and no modification of the operating system kernel or additional kernel modules is required. In one embodiment, the checkpointing is implanted using a device driver in lieu of operating system kernel modification. In another embodiment, the state of waiting queues is captured using kernel-level interception of system calls. In one mode, the interception can be implemented in a kernel module in a multiprocessing environment. In another mode, the interception can be implemented without a kernel module in a single processing environment.

In the various examples described above, storage checkpointing can be included by providing means for saving N full copies of storage checkpoints; providing a hardlink to a first saved storage checkpoint; and removing the first storage checkpoint when a subsequent storage checkpoint is saved and maintaining the hardlink to the first saved storage checkpoint; wherein a physical copy of said first storage checkpoint is not made when said subsequent storage checkpoint is saved. In one mode, the storage image is synchronized with a memory image at the time a storage checkpoint is saved; wherein each memory checkpoint has a corresponding storage checkpoint. In another mode, the storage image is captured without capturing the memory image of the process.

In one example, a template can be provided which defines one or more processes to be protected by checkpointing and which provides for selective restoration. In one embodiment, means are provided for defining one or more processes to be protected by checkpointing and provide for selective restoration.

In one example, there may be provided a method, system, improvement and computer program for achieving transparent integration of an application program with the checkpointing library and an underlying high availability protection program, that transparently and automatically injects startup and registration code (which herein shall be referred to as *"et_init()')* into an application program during launch; wherein the checkpoint library gets initialized; wherein said application program automatically registers with said high availability protection program; wherein modification of the application program or application program recompilation is not required; and wherein a custom loader is not required. In one embodiment, unregistration of said application program from said high availability program is monitored and deemed a normal exit.

Embodiments of the present invention can provide a number of beneficial aspects which can be implemented either separately or in any desired combination without departing from the present teachings.

In one example, there may be provided a method, system, computer program, computer executable program, or improvement wherein storage checkpointing is provided.

In one example, there may be provided a method, system, computer program, computer executable program, or improvement wherein storage checkpointing synchronized with process checkpointing is provided.

In one example, there may be provided a method, system, computer program, computer executable program, improvement as recited in any of the preceding claims, wherein profiling of running applications is provided to determine optimal policy settings.

Further aspects of the invention will be brought out in the following portions of the specification, wherein the detailed description is for the purpose of fully disclosing preferred embodiments of the invention without placing limitations thereon.

### BRIEF DESCRIPTION OF THE SEVERAL VIEWS OF THE DRAWING(S)

FIG. 1 is a flow diagram illustrating incremental checkpointing according to an embodiment of the present invention, showing maintaining a page table within a checkpointing library and the incremental checkpointing of only those memory pages modified since the last checkpoint.
FIG. 2 is a flow diagram illustrating claiming a mutex construct to add a process to a barrier according to an aspect of the present invention.
FIG. 3 is a flow diagram illustrating releasing a mutex construct to release a process from a barrier according to an aspect of the present invention.
FIG. 4 is a flow diagram illustrating adding threads to a barrier according to an aspect of the present invention.
FIG. 5 is a flow diagram illustrating waiting at a thread barrier according to an aspect of the present invention.
FIG. 6 is a flow diagram illustrating waiting for other threads to reach a barrier according to an aspect of the present invention.
FIG. 7 is a hierarchy diagram illustrating a multi-process checkpointing configuration according to an aspect/embodiment of the present invention.
FIG. 8 is a flow diagram illustrating processes taking multiprocess checkpoints according to an aspect/embodiment of the present invention.
FIG. 9 is a flow diagram illustrating restoration from multiprocess checkpoints according to an aspect/embodiment of the present invention.

### DETAILED DESCRIPTION OF THE INVENTION

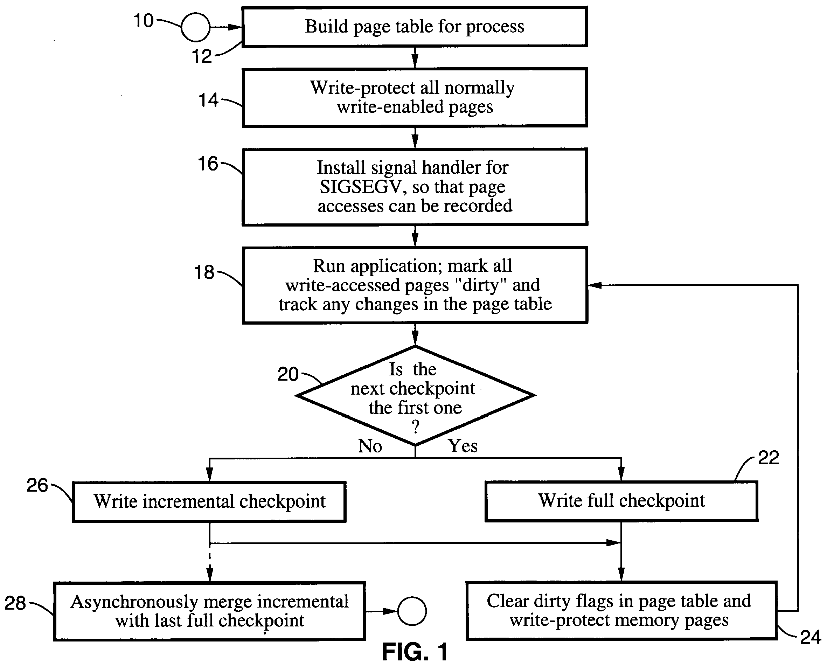

Referring more specifically to the drawings, for illustrative purposes the present invention will be described in relation to FIG. 1 through FIG. 9. It will be appreciated that the system and apparatus of the invention may vary as to configuration and as to details of the constituent components, and that the method may vary as to the specific steps and sequence, without departing from the basic concepts as disclosed herein.

### 1. Introduction.

The present invention is based on a single-process, multithreaded checkpointing method with numerous enhancements and improvements upon, such as incremental checkpointing, improved barrier synchronization, multiprocess checkpointing, storage checkpointing, and the use of a loadable kernel module to capture the state the kernel keeps on behalf of application processes.

### 2. Transparent Preloading Of The Checkpoint Library.

In order to provide checkpointing to an application, the checkpointing software should be loaded into the address space of the application. In addition, the checkpointing services should be initialized at program startup and shut down at program exit. Traditionally, this process has involved adding custom code to the application, therein necessitating compilation and linking. However, in many situations the end user of a program does not even have access to the source code, so that practice is subject to limited applicability.

Therefore, an important aspect of the present invention is *transparency*, wherein, for example, the application program need not be modified in any way to allow checkpointing. More precisely, the application program need not be changed, and therefore, it need not be recompiled. Moreover, the application executable need not be relinked to include the checkpointing code in its address space. The technique utilized to enable checkpointing and initialize the checkpointing library is called *transparent preloading.* The method is based on the concept of shared libraries, which are supported by all modern operating systems, e.g., Microsoft Windows, Linux, Apple OS X, and others.

In the present invention, the user-level portion of the checkpointing source code is compiled into a position-independent shared library. This enables either relinking with the application, or more transparently, preloading. By way of example, and not of limitation, the following general sequence of steps illustrates preloading on the Linux operating system in an exemplary embodiment of the invention:
1. Setting the environment variable *LD_PRELOAD* to the location of the checkpoint library. For example, if the checkpoint library is named *"libetchkpt.so"*, and is located in directory *"*/*home*/*chkpt*/*"*, then set *LD*_*PRELOAD*=/*home*/*chkpt*/*libetchkpt*.*so*. Additional libraries may need to be appended so that the checkpoint library depends to this path.
2. Starting the application in the usual way. The checkpoint library is preloaded, and its initialization routine in *"*_*init()"* is executed *before* the application executes its *"main()"* function. Also in *_init()*, the checkpoint library registers an exit handler that gets invoked whenever the application calls the "*exit()"* function, permitting a regular shutdown of checkpointing before the program terminates.
3. Interception of any system library calls that the application makes by the checkpoint library if necessary. Examples of such calls are *"pthread_create()"*, to create a new execution thread, or *"mmap()"*, to map a new segment of memory. There are numerous additional library calls similar to these that can be intercepted according to the invention. This interception technique allows the checkpoint library to do its bookkeeping and operation transparently.

### 3. Incremental Checkpointing.

One method of checkpointing a process is to take full checkpoints each time, for example save all currently used memory pages. Another method, incremental checkpointing, is described in the following. In incremental checkpointing, the size of the checkpoint is minimized by saving only those memory pages that were modified since the last checkpoint. These modified pages are also referred to as "dirty" pages.

FIG. 1 illustrates an embodiment of the invention for incremental checkpointing. Execution is shown entering from block 10, and block 12 represents checkpointing library maintaining a page table for all pages currently mapped to the process. Any changes to memory segments and pages are tracked and the table is updated accordingly. Write-protecting segments that are write-accessible for the application is depicted as per block 14 as being performed by the checkpointing library. It should be noted that a *SIGSEGV* ("segmentation violation") signal will be generated if the process attempts to modify a page in a write-protected segment.

In block 16 the library installs a signal handler for *SIGSEGV*, which identifies the page that was accessed, looks it up in the page table, and then marks it as "dirty" in block 18. The signal handler then reverts the protection for the page back to the original protection set by the application, so that the write access can be permitted.

In block 20, if it is determined that this is the first checkpoint, the library writes a full checkpoint only once as per block 22, therein forming the basis for subsequent incremental checkpoints. The dirty flags are cleared in the page table as per block 24.

In block 26, when it is determined not to be the first checkpoint, dirty pages are identified via the page table, and written to an incremental checkpoint. After the checkpoint is saved, the dirty flags are cleared and the memory is write-protected again at block 24 before the application threads are released from the checkpoint.

Incremental checkpoints generated in the above manner should be continuously merged with a previous full checkpoint to produce a new valid full checkpoint. Block 28 represents a separate, connected process, so that merging is performed asynchronously in response to the writing of an incremental checkpoint.

By using incremental checkpointing, an application can produce a checkpoint more readily, at the expense of additional processing time for merging checkpoints.

### 4. Semaphore-Based Barrier Synchronization.

The following is a description of an embodiment of a barrier mechanism according to the invention, which is based on System V (kernel) semaphores and which enables holding multiple processes and all their associated threads in the same barrier. This is an important prerequisite to achieve consistent checkpoints across multiple processes of a single application.

System V semaphores are a synchronization primitive that can be shared across multiple processes. The kernel maintains these semaphores, and provides system calls to create, open, or modify a set of semaphores. These system calls are *semget()*, *semctl()*, and *semop()*. See the Linux manual for further information.

### 4.1 Barrier Setup.

The information needed for the barrier is stored in a data structure that is accessible to all processes via shared memory. The data structure looks somewhat like this (pseudo-code given in the C programming language):

```
          typedef struct {
           int semid; /* id of semaphore array containing barrier semaphores */
           int num_procs; /* overall number of processes in the group */
           int waiting_procs; /* no. of processes that have entered thread info */
           int num_threads; /* overall number of threads */
           int waiting_threads; /* number of threads waiting at barrier */
          } barrier_t;
```

There is an entry for the semaphore identifier obtained via *semget()*, an entry for the total number of processes participating in the barrier, an entry for the number of processes waiting at the barrier, and entry for the total number of threads participating in the barrier, and an entry for the number of threads waiting at the barrier.

The inventive barrier structure is mapped into the process memory via the following call:

```
          barrier = mmap(BARRIER_ADDR, sizeof(barrier_t),
                   PROT_READ | PROT_WRITE,
                   MAP_SHARED | MAP_ANONYMOUS, -1, 0);
```

The semaphore identifier in the barrier structure refers to an array of kernel semaphores containing:
one semaphore used as a mutex to synchronize access to the other entries in the barrier structure;
one semaphore used as a barrier for processes to add their current number of threads, and
*n* semaphores used as thread barrier semaphores, with *n* being the number of barriers required to write a checkpoint (in the current implementation, *n* = 6).

These *n* + 2 semaphores are obtained via the following relation:

```
barrier->semid = semget(semkey, N + 2, IPC_CREAT |
                             S_IRUSR | S_IWUSR);
```

### 4.2 Barrier Mechanism.

Now that an example of barrier data structures has been provided, we will now describe various barrier mechanism.

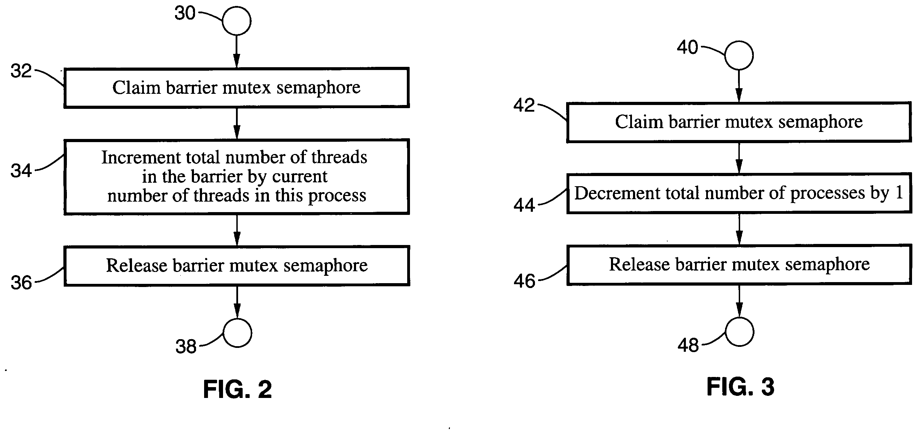

First, referring to FIG. 2, an embodiment of a method for adding a process to a barrier according to the present invention is illustrated. In this example, when a new process starts up, the present invention is generally configured to add the process to the barrier. Execution from entry 30 reaches block 32 representing claiming of the mutex semaphore, followed by incrementing the total number of processes by one in block 34, and block 36 in which releasing the mutex semaphore is represented before exit 38 of this code section.

FIG. 3 illustrates, by way of example, an embodiment of a method for removing a process from the barrier in response to process termination according to the invention. Here, execution from entry 40 reaches block 42 representing claiming of the mutex semaphore, followed by decrementing the total number of processes by one as per block 44, and releasing the mutex semaphore in block 46 is performed before exit 48.

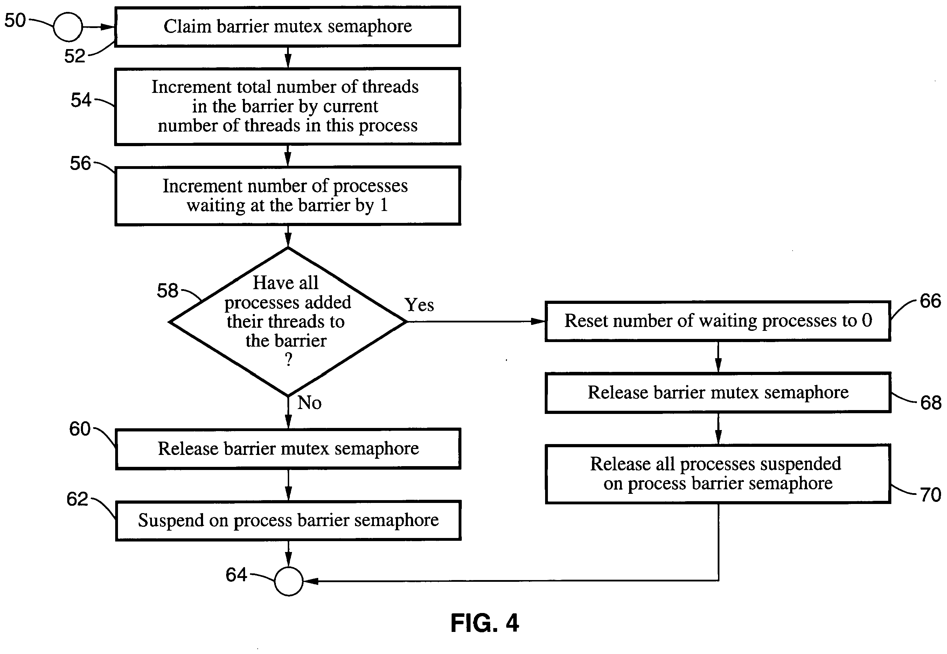

FIG. 4 illustrates, by way of example, a method according to the invention for incrementing the number of threads of the process in the barrier at the beginning of a checkpoint. Execution from entry 50 reaches block 52 which represents the mutex semaphore being claimed. In block 54 the total number of threads in the barrier is incremented by the current number of its threads. Then the value for the number of processes waiting at the barrier is incremented by one as per block 56. A determination is made at block 58 if all processes have added their threads to the barrier. If all processes have not added their threads to the barrier then mutex semaphores are released as per block 60, and in block 62 a suspend takes place on the process barrier semaphore before exit 64.

However, if all processes have added their threads to the barrier then the number of waiting processes is reset to zero as per block 66, and the mutex semaphores are released at block 68. Finally, all other processes suspended on the process semaphore are released as given by block 70 prior to exit 64.

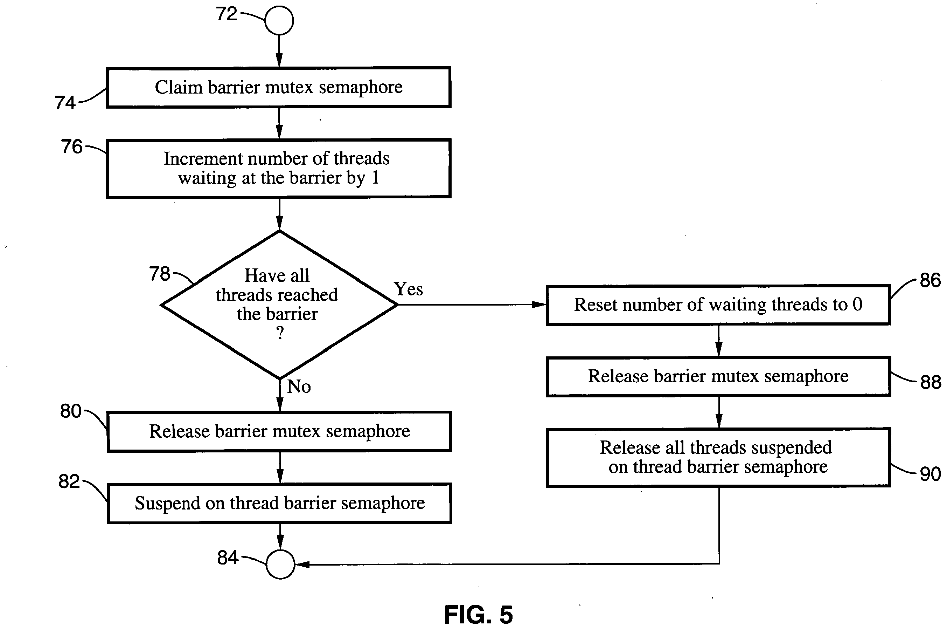

FIG. 5 illustrates, by way of example, an embodiment of a method for waiting at a thread barrier according to the invention. In this example, a thread waits at barrier *j*. Execution from entry 72 reaches block 74 at which the mutex semaphore is claimed. As per block 76 the number of threads waiting at the barrier is incremented by one. A determination is made at block 78 if all threads have reached the barrier. If not all threads have reached this barrier, then as per block 80 the mutex semaphore is released, and thread barrier semaphore *j* is suspended at block 82 prior to exit 84 of this section.

In the case where all threads have reached the barrier, then the number of waiting threads is reset, such as to zero, in block 86, the mutex semaphore for the barrier is released as per block 88, all other threads suspended on thread semaphore *j* are released as given by block 90 and this section of code is exited 84.

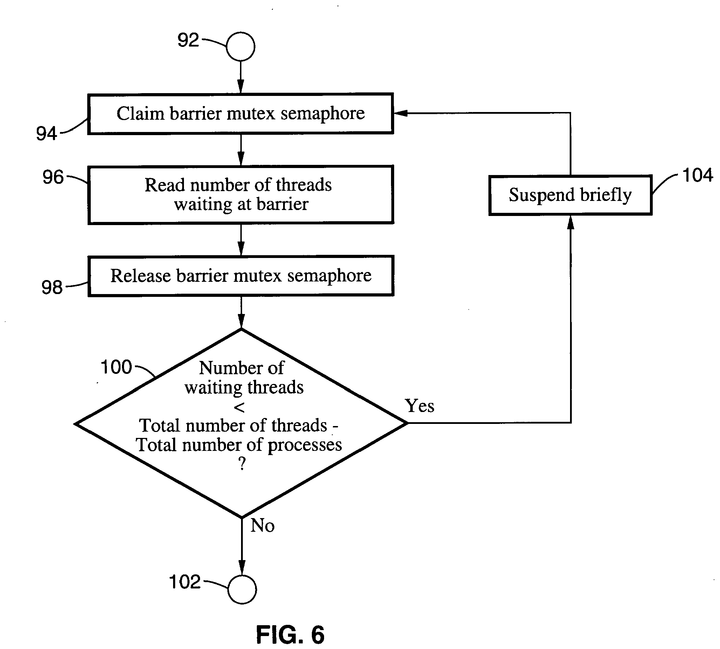

FIG. 6 illustrates, by way of example, an embodiment of a method according to the invention by which a single thread per process can execute another barrier operation. In this example, one thread per process waits for all other threads to reach barrier *j* by repeatedly executing the process outlined in the figure. After entry 92 the mutex semaphore is claimed at block 94, followed by reading the number of threads waiting at the barrier as per block 96, and releasing the mutex semaphore for the barrier at block 98. A determination is made as per block 100 if the number of waiting threads is less than the total number of threads minus the total number of processes. If determination yields a negative result then this section exits 102, if the number of threads is less than this value then a brief suspension is performed as per block 104 prior to continuing to claim mutexes at block 94.

### 5. Multiprocess Checkpointing.

The following is an overview of multi-process checkpointing according to an embodiment of the invention. The description assumes familiarity with the concepts of single-process checkpointing as well as the semaphore-based barrier mechanism as would be known to one of ordinary skill in the art.

### 5.1 Setup.

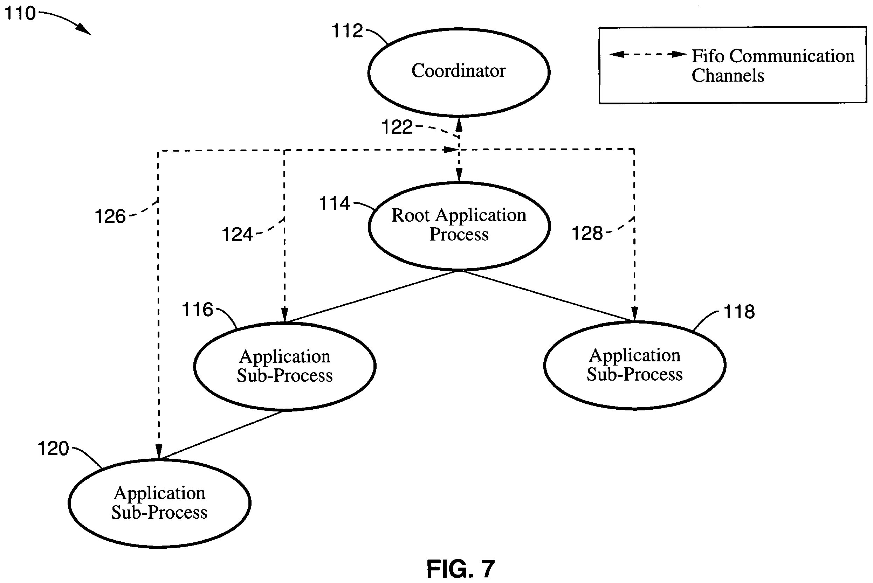

FIG. 7 illustrates an example embodiment of multiprocess checkpointing setup 110 according to the present invention. In order to control the synchronous checkpointing of multiple processes in an application process tree, a dedicated process referred to herein as a coordinator 112 is placed at the top of each such tree. The root process in every application process tree is coordinator 112, which then forks the top-most root application process 114 from which forks two application sub-processes 116 and 118 then later forks application sub-process 120. After that, the coordinator remains in a server loop waiting for, and processing, messages from application processes.

Each application process connects to the coordinator via two named pipes, for example "FIFOs", 122, 124, 126, and 128. This connection is handled transparently in an interceptor for the *fork()* system call. The coordinator, upon receiving a new process registration, sets up its end of the communication channels and enters the new process information in the process table and the shared barrier structure. The information stored for each process includes its *pid*, parent *pid*, and communication FIFO file descriptors. The coordinator itself may also connect to an underlying high-availability system, such as via two FIFOs.

In a manner similar to single-process checkpointing, each process has a checkpoint thread that controls the local single-process checkpoints. In the multi-process case, however, the individual checkpoint threads do not have a timer of their own; instead, they wait for a new signal from the checkpoint thread of the coordinator referred to herein as the "prepare checkpoint" signal. The only checkpoint thread waiting to time out for a new checkpoint is that of the coordinator. Therefore, the checkpoint thread of the coordinator acts as "master", and all other checkpoint threads act as "slaves".

### 5.2 Taking Multiprocess Checkpoints.

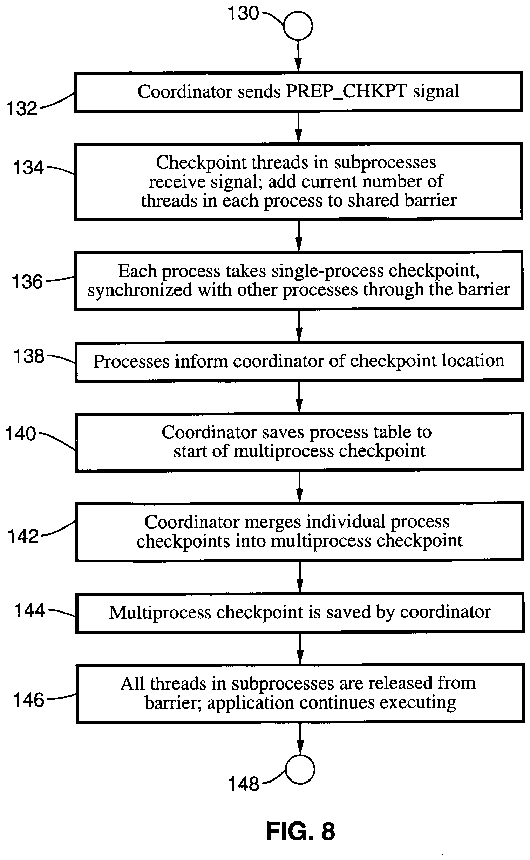

FIG. 8 illustrates, by way of example, the taking of multiprocess checkpoints according to an embodiment of the invention. After entry 130 the coordinator sends the *"prepare checkpoint"* signal as per block 132, wherein all checkpoint threads add the current number of threads in their process to the shared barrier as per block 134. With the barrier now established, each process proceeds to take a single-process, local checkpoint as per block 136. The shared barrier ensures that this is done in a synchronized, memory-consistent way.

Local checkpoints are either saved to disk or to a memory buffer shared with the coordinator. The application processes then send a message to the coordinator, informing it about the location of the checkpoint as depicted in block 138. The coordinator saves the process table at the beginning of its own checkpoint at block 140, then joins (merges) all checkpoints together at block 142 into a single process group checkpoint as a multiprocess checkpoint which is saved by the coordinator at block 144. All threads in the sub-processes are then released from the barrier at block 146 and application execution resumes at block 148.

### 5.3 Restoring the Process Tree.

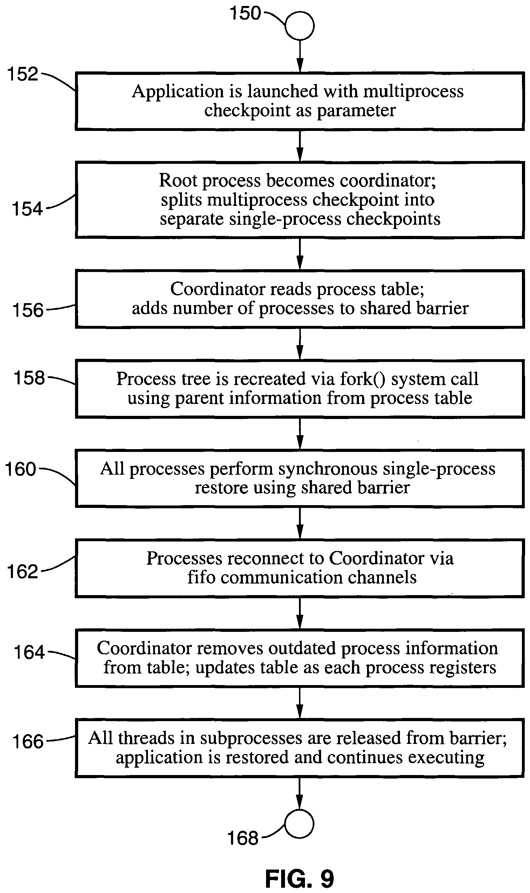

FIG. 9 illustrates by way of example embodiment of the invention the restoration of the complete process tree. Entry is made at 150 with the application simply launched in the same manner as before, whereafter the process group checkpoint file is passed as a parameter as represented by block 152. Again, the root process becomes the coordinator as given by block 154. The coordinator opens the joined checkpoint file and uses information at the file header to split the file into separate single-process checkpoints. Next, it reads the process tree information from the checkpoint and adds the number of processes to the shared barrier as per block 156. The coordinator then forks a process tree of the same structure as at the time the checkpoint was taken at block 158, using the parent information included in the process table. From there, the individual processes open their local checkpoint files and performs a memory-map restore similar to the single-process case as per block 160. The shared barrier ensures that this operation is performed synchronously.

After remapping their address spaces, all application processes reconnect to the coordinator as per block 162, which removes the outdated process information from its table as per block 164 and waits for incoming process registration messages. At the end of this phase, the communication setup is identical to the time the checkpoint was taken. Once all FIFOs are reestablished, the restore procedure is over, the barrier is released at block 166, and the application processes can continue 168.

### 5.4 Fault Detection.

The coordinator can detect the forced disconnection of any application process via the broken FIFO connection. An orderly disconnect from an exiting process includes communicating a disconnect message to the coordinator, so that the coordinator can mark the process as "dead" within its data structure. Only after the coordinator replies to the disconnect request can the application process exit.

If the coordinator detects a forced disconnect through the process FIFOs, it kills all other application processes at once, since it must be assumed that the application is in an inconsistent state, wherein it exits itself so that the application can be restored from the last checkpoint.

### 6. Checkpoint Kernel Module.

The checkpoint kernel module in the invention is used in conjunction with the checkpointing library for the following tasks:
(a) Saving and restoring the kernel state of a process;
(b) Excluding process state;
(c) Reconnecting the pointers for shared files between parent and children after restore; and
(d) Fixing one-end pipes after restore.

According to one aspect of the invention the checkpoint kernel module is implemented as a character device driver with a pseudo-device entry in the file system.

### 6.1 Device-driver Interface.

A device driver in Linux can be implemented as a loadable kernel module (LKM), which allows the device driver to be loaded or unloaded from the kernel on demand. This is the preferred mechanism for implementing the checkpoint kernel module. The kernel module can be loaded into the kernel via the command *"insmod"* and unloaded via the command *"rmmod".*

The kernel module (device driver) interface to the user-space is preferably implemented using a pseudo character device, such as *"*/*dev*/*etchkptdev"*. This device can be created for example by using the tool *"mkdevnod"*, which is provided with the kernel module.

According to this embodiment of the present invention, character device interfaces including (1) open, (2) release (i.e., close), (3) read, (4) write, and (5) *ioctl* (input/output control) are implemented in the checkpoint kernel module.

It will be appreciated that the device needs to be opened before it can be used. During the open call a file descriptor is assigned to the caller by the kernel. According to this embodiment every process using the checkpointing library will have to open this device individually. So, if there are 10 processes being checkpointed, the checkpoint device will be opened 10 times. The same holds when checkpointing an application with multiple processes. As with any other file descriptor, the file descriptor referring to the checkpoint device should be closed after use.

When a read call is issued on the file descriptor referring to the checkpoint device, the invention's kernel module interprets this as a call to read/save process state. When a write call is issued on the file descriptor referring to the checkpoint device, the kernel module interprets this as a call to write/restore process state. Additional details on read and write calls are provided below.

The input/output control (ioctl) call can be issued on the file descriptor referring to the invention's checkpoint device to perform a number of auxiliary operations. The following is a list of these operations, which are described in detail in their appropriate sections:
(a) ET_CPDEV_IOCTL_REG_PROC - to register a process;
(b) ET_CPDEV_IOCTL_UREG_PROC - to unregister a process;
(c) ET_CPDEV_IOCTL_FSHARE - to share a file entry;
(d) ET_CPDEV_IOCTL_FCLOWN - to claim ownership of a file entry;
(e) ET_CPDEV_IOCTL_FREOWN - to reset ownership of a file entry;
(f) ET_CPDEV_IOCTL_FGEOWN - to get ownership of a file entry; and
(g) ET_CPDEV_IOCTL_PLUMB - to fix pipes.

### 6.3 Saving and Restoring Kernel State.

There are components of the state of a process that can only be saved from the kernel space; e.g., the contents of the data buffers of pipes and FIFOs. In addition, some things can be saved more efficiently in the kernel, such as the memory-map state and the file-descriptor state.

As described above, a read call from the invention's kernel module API is used to save the process state. The save buffer is allocated in user space and is passed as an argument to the read call. If the buffer is not big enough to store the process state, the call returns an error (*errno* = *EAGAIN*). In such a case a larger buffer is allocated in the user space and the operation is retried. All this buffer management is wrapped into the kernel module API functions. The invention's checkpointing library asks for state information using an API, which internally allocates the buffer and reads the state from the kernel.

The first few bytes in the buffer passed to the kernel contain the identifier of the type of state that should be saved by the kernel. Currently the following two types are defined as (1) File state, (2) Memory-map state. The kernel reads the type information and only returns the specified type of state.

A write call from the invention's kernel module API is used to restore the process state. The restore buffer is created in user space and is passed as an argument to the write call. The buffer management is wrapped into the kernel module API functions. The invention's checkpointing library sets the state using an API, which writes the state to the kernel.

The checkpointing library can save/restore specific state types by using functions provided by the kernel module API, for example it can choose to get the memory-map state independent of the file state.

### 6.4 Reconnecting File Pointers.

After a *fork()* system call, certain resources are shared between the parent and the child process (e.g., open file descriptors, shared memory segments, semaphores). In the original run of the checkpointed program these resources are still shared because the semantics of *fork()* are maintained. However, after restore these resources are separated because the parent and the child restore their state independently.

Thus, the invention's kernel module is configured to reconstruct the situation that existed at the time of the checkpoint. The parent and child process need to share the same files after restore and their file descriptor entries need to point to the same file table entries. The file table entry is where the properties of the file descriptor are stored, for example information such as file position, owner, and so forth. Accordingly, changes made in the parent should be reflected in the child and vice versa.

The invention's kernel module provides mechanisms for handling these situations. At checkpoint time the processes try to claim ownership of all shared file descriptors one at a time, for example using the kernel module API *"chkptdev_door_claim_ownership_of"*, which internally uses the *ioctl ET*_*CPDEV*_*IOCTL_FCLOWN.* If no other process has yet claimed ownership for a given file descriptor, the kernel makes the calling process the owner of that file descriptor by recording its information, such as process identifier, file descriptor number, and so forth, in the *f_owner* struct of the file descriptor, which is shared amongst all other references to the same file. The old value in the *f_owner* structure is returned so that it can be restored later. If another process has already claimed ownership of the file descriptor, the kernel returns the ownership information. This mechanism designates one process in a group of processes sharing the file descriptor as the owner of the file descriptor.

On restore, the owner of the file descriptor opens the file and restores it, while the non-owners share their file pointer with the owner, for example using the kernel module API *"chkptdev_door_share_file"*, which internally uses the *ioctl ET_CPDEV_IOCTL_FSHARE.* At this time, synchronization is required between processes such that the owner should have finished its operation before the non-owner tries to share. This is achieved in the described embodiment using the above barrier synchronization in the checkpointing library. The kernel module does not care about synchronizing these operations.

After the checkpoint is taken the ownership information is reset using the inventions kernel module API "*chkptdev_door_reset_ownership_of*", which internally uses the *ioctl ET_CPDEV_IOCTL_FREOWN.* Ownership information can be obtained using the kernel module API *"chkptdev*_*door_get_ownership_of"*, which internally uses the *ioctl ET_CPDEV_IOCTL_FGEOWN.*

### 6.5 Fixing Pipes.

Typical inter-process communication (IPC) using pipes is implemented in such a way that one of the processes closes the reading end of the pipe, while another closes the writing end of the pipe.

If one process closes one end and the other process closes the other end, then from the perspective of the kernel these are two different files, even though they share the same file system inode. Since the file sharing mechanism (described in the previous section) is implemented at the level of files and not inodes, the processes assume independent ownership of these files, which is not correct because they should point to the same inode.

The file-level sharing in the invention's kernel module would not work in this case because the two ends have their own separate file pointers in the kernel, which are not related except for the inode which both of them share. Therefore, the invention's kernel module fixes pipes to allow sharing at the inode level. The difference between this and the file-sharing approach above is that one cannot use the kernel as the switchboard to claim ownership, because no empty field exists in the inode structure that can be used to mark ownership.

To solve this problem, the shared memory hash table data structure in the checkpointing library was modified to allow use as the switchboard. After claiming ownership at the kernel level, a process tries to enter the inode number in the shared memory hash table. The first process to do so becomes the registered owner of the pipe. The other process, although owner of one of the ends of the pipe, is not a registered owner. At restore time the checkpointing library queries the global hash table for registration information for such pipes. In the present case the registered owner does nothing. The other owner uses the kernel module API *"chkptdev_door_plumb"*, which internally uses the *ioctl ET_CPDEV_IOCTL_PLUMB* to "plumb" its pipe. During this operation the kernel detaches the current inode from the pipe and attaches the inode for the pipe of the registered owner

### 6.6 The Kernel Module API.

The invention's kernel module API is implemented in a shared library that hides the usage of the kernel module from the checkpointing library. The checkpointing library calls generic functions for operations and the kernel module API hides the implementation semantics in those wrapper functions.

The kernel module API library opens the checkpoint device in its *_init* function, which is automatically called when the process starts up. It closes the checkpoint device in its *_fini* function, which is automatically called when the process is being shut down.

In addition, the library according to the present embodiment of the invention preferably provides the following APIs:
MANUAL INITIALIZATION:
   int chkptdev_door_init(void);
MANUAL SHUTDOWN:
   int chkptdev_door_exit(void);
GETTING PROCESS STATE:
   int chkptdev_door_get_process_state(void **pp, size_t *psize, et_excluded_t *pe);
SETTING PROCESS STATE:
   int chkptdev_door_set_process_state(const void *p, const size_t size);
FREEING PROCESS STATE:
   int chkptdev_door_free_process_state(void *p, const size_t size);
PRINTING PROCESS STATE:
   int chkptdev_door_print_process_state(const void *p, const size_t size);
GETTING PROCESS FILE STATE:
   int chkptdev_door_get_process_files_state(void **pp, size_t *psize, et_excludedf_t *pe);
SETTING PROCESS FILE STATE:
   int chkptdev_door_set_process_files_state(const void *p, const size_t size);
FREEING PROCESS FILE STATE:
   int chkptdev_door_free_process_files_state(void *p, const size_t size);
PRINTING PROCESS FILE STATE:
   int chkptdev_door_print_process_files_state(const void *p, const size_t size);
GETTING PROCESS MEMORY-MAP STATE:
   int chkptdev_door_get_process_memap_state(void **pp,
   size_t *psize, et_excludedm_t *pe);
SETTING PROCESS MEMORY-MAP STATE:
   int chkptdev_door_set_process_memap_state(const void *p, const size_t size);
FREEING PROCESS MEMORY-MAP STATE:
   int chkptdev_door_free_process_memap_state(void *p, const size_t size);
PRINTING PROCESS MEMORY-MAP STATE:
   int chkptdev_door_print_process_memap_state(const void *p, const size_t size);
SHARING A FILE:
   int chkptdev_door_share_file(const unsigned int src_fd, const pid_t src_pid, const unsigned int dst_fd, const pid_t dst_pid);
CLAIMING OWNERSHIP OF A FILE:
   int chkptdev_door_claim_ownership_of(const unsigned int fd, const pid_t id, char *pstatus, fown_struct_t *powner);
RESETTING OWNERSHIP OF A FILE:
   int chkptdev_door_reset_ownership_of(const unsigned int fd, const pid_t id, const fown_struct_t *powner);
GETTING OWNERSHIP OF A FILE:
   int chkptdev_door_get_ownership_of(const unsigned int fd, fown_struct_t *powner);
FIXING PIPES:
   int chkptdev_door_plumb(const unsigned int src_fd, const pid_t src_pid, const unsigned int dst_fd, const pid_t dst_pid);

### 6.7 Device Node Creation Tool.

Once the invention's kernel module of the checkpointing library is loaded, the kernel assigns it a major device number. The device node for the pseudo-device is preferably created using that major number, so that the kernel invokes the checkpoint kernel module if someone opens the checkpoint device. The kernel puts the major number assigned to the checkpoint device driver in the file *"*/*proc*/*devices".* The device node creation tool, called *"mkdevnod"*, reads the major number from there and then uses the system call *"mknod()"* to create a pseudo character device with that major number. This approach eliminates the need of having to reserve a major number for the checkpoint device.

### 7. Storage Checkpointing.

In order to capture a consistent state of an application, it is not generally sufficient to merely obtain memory checkpoints. Consider an example in which an application runs for a period of time and takes several memory checkpoints. As part of application processing it writes data to a file located on a storage device. If at some point the application process crashes, the memory image of the application can be restored to the time of the last checkpoint. However, the output file will reflect the situation right before the crash, which would be inconsistent. In some cases, the inconsistency can be remedied by simply resetting the file pointer to its location at checkpoint time; however, if the file was deleted or copied by the application after the last checkpoint, it cannot be recovered by memory checkpointing alone. A solution to this problem involves storage checkpointing, in which for example the contents of files that an application is using are saved along with the associated memory state.

The invention's storage checkpointing solution presented herein is fully integrated with the memory checkpointing described above. The invention saves and restores the files used by a particular application, in contrast to other solutions that checkpoint whole file systems.

### 7.1 Taking A Storage Checkpoint.

A couple of conditions are incumbent upon the user in utilizing the invention's storage checkpointing. (1) The user specifies one or more directories that should be protected by storage checkpointing and for each directory, and the user indicates if it is on shared storage. (2) The user specifies a directory for the storage checkpoint which is on a shared file system visible to a backup machine.

The programming according to the present invention is configured to perform a number of aspects in relation to the storage checkpointing. (1a) The programming maintains two checkpoints in memory, including a newer and older checkpoint. (1b) If the specified checkpoint directory is *"*/*home*/*alpha"*, one checkpoint is kept in *"*/*home*/*alpha*/*previouschkpt"* and one copy in *"*/*home*/*alpha*/*newchkpt".* (1c) The files in the older checkpoint are maintained as copies, whereas the newer checkpoint is made up of file copies and links (described below). (2) A complete copy of the designated directories are saved into the specified storage checkpoint directory, such as *"*/*home*/*alpha*/*newchkpt"*, before starting the application. (3) Storage checkpoints are taken at the time of each memory checkpoint. (4) Before taking a new storage checkpoint the last two storage checkpoints are merged into one, for instance the newer checkpoint is merged into the older checkpoint. (5) An "intention log" is created before the merge process commences to indicate future steps, such as what files are to be merged, whereby problems are avoided if merging is interrupted, because merging can be finished in response to the instructions contained in the intention log prior to a restore. (6) Upon merge completion it is known that at least one valid storage checkpoint is available, and a new checkpoint can be taken. Files in the protected directories are compared with those that were checkpointed last time, such as files in *"*/*home*/*alpha*/*previouschkpt".* All updated files are copied into the newer storage checkpoint directory, such as *"*/*home*/*alpha*/*newchkpt"*. For all the non-updated files, a link is created by the programming from the newer storage checkpoint to the older storage checkpoint. (7) Files are considered to have been updated when their respective timestamps have been updated (up or down) since the last checkpoint, or if their files size value has changed since the last checkpoint.

### 7.2 Restoring A Storage Checkpoint.

The method, and programming, according to the present invention is configured for restoring a storage checkpoint. On restoration of a checkpoint, the files in the user-specified directories and those in the newer storage checkpoint directory are compared. It should be appreciated that if the newer storage checkpoint directory is invalid, or empty, then information from the older storage checkpoint directory is utilized. The files that were checkpointed will replace files that have been updated since that checkpoint.

### 8. Conclusion.

In the embodiments described herein, an example programming environment was described for which an embodiment of programming according to the invention was taught. It should be appreciated that the present invention can be implemented by one of ordinary skill in the art using different program organizations and structures, different data structures, and of course any desired naming conventions without departing from the teachings herein. In addition, the invention can be ported, or otherwise configured for, use across a wide range of operating system environments.

Although the description above contains many details, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more".

### APPENDIX A

### Abstract

Multiple threads running in a single, shared address space is a simple model for writing parallel programs for symmetric multiprocessor (SMP) machines and for overlapping I/O and computation in programs run on either SMP or single processor machines. Often a long running program's user would like the program to save its state periodically in a *checkpoint* from which it can recover in case of a failure. This paper introduces the first system to provide checkpointing support for multithreaded programs that use LinuxThreads, the POSIX based threads library for Linux.

The checkpointing library is simple to use, flexible, and efficient. Virtually all of the overhead of the checkpointing system comes from saving the checkpoint to disk. The checkpointing library added no measurable overhead to tested application programs when they took no checkpoints. Checkpoint file size is approximately the same size as the checkpointed process's address space. On the current implementation WATER-SPATIAL from the SPLASH2 benchmark suite saved a 2.8 MB checkpoint in about 0.18 seconds for local disk or about 21.55 seconds for an NFS mounted disk. The overhead of saving state to disk can be minimized through various techniques including varying the checkpoint interval and excluding regions of the address space from checkpoints.

### 1 Introduction

Computer systems are prone to hardware and software failures and the probability that a machine will crash before a process finishes running grows in proportion to the process's run time. A process can save its state in a checkpoint to help tolerate system downtime. A multithreaded process has both private state and shared state. A thread's *private state* includes its program counter, stack pointer, and registers. Its *shared state* includes everything common to all threads in the process, such as the address space and open file state. A multithreaded checkpointing library must save and recover the process's shared state and each thread's private state.
*This research was supported by the National Science Foundation under Grant CDA-9502645, NFS/EPSCoR under Grant EPS-9874764, the Advanced Research Projects Agency under Grant DAAH04-96-1-0327, and the Kentucky Opportunity Fellowship.

*User*-*level thread libraries* are implemented outside the kernel using timers to preempt threads when their time slice is over. Implementing a checkpointing library for a user-level threads package is a straightforward extension of a single-threaded checkpointing library because a user-level multithreaded process is no different from a single-threaded process from the operating system's point of view. User-level threads cannot take advantage of a symmetric multiprocessor (SMP), however, because the kernel is not aware of the threads. Thus it cannot schedule them to run concurrently on separate processors.

With *kernel-level threads*, like LinuxThreads in Linux or lightweight processes in Solaris, the kernel schedules threads and keeps track of their state. Not only must the checkpointing library save and restore the address space of the process to recover the thread state, but it must also call the kernel to restart threads during recovery.

*Hybrid* thread libraries like the one found in Solaris, use both kernel-level and user-level threads. User-level threads are scheduled to run inside several kernel-level threads, called light-weight processes (LWP) in Solaris. The library usually starts with one LWP per processor. If a user-level thread makes a blocking call and there are more runnable threads, the thread library starts a new LWP so the whole process does not need to block. A hybrid thread library cannot be checkpointed like a user-threads library because it uses kernel-level threads. We have tested our checkpointing library on several programs in the SPLASH-2 benchmark suite in addition to some simple test programs. The WATER-SPATIAL application ran with no noticeable overhead other than the time to save a checkpoint. It saved a 2.8 MB checkpoint to local disk in about 0.18 seconds and to an NFS mounted disk in about 21.55 seconds. The time to save a checkpoint to disk is about the same as the time required to copy a file of the same size as the checkpoint with the cp command.

The rest of the paper is organized as follows. Section 2 discusses related work and section 3 describes how programmers and users use the checkpointing library. Section 4 presents the design and implementation of such a library. Section 5 describes restrictions on programs using the checkpointing library. Finally, section 6 shows experimental results and performance.

### 2 Related work

Checkpointing is a popular way of providing fault-tolerance for computer systems. Both user-level and kernel-level checkpointing systems have been developed for single threaded processes, however, ours is the first to provide support for multithreaded programs. In addition, our system provides this functionality in the form of a user-level library which makes it easier to use and the design is still efficient.

Several other user-level checkpointing libraries for single processes run on multiple versions of Unix [12, 14, 16]. libckpt has many features including asynchronous (forked) checkpointing, incremental checkpointing, memory exclusion and user-directed checkpointing [12]. It has been ported to many different versions of Unix. However, libckpt does not handle multithreaded processes or dynamically linked executables.

Condor is a process migration system designed to use idle cycles in the network [14]. When the system decides to migrate a process it checkpoints the process on one machine then restarts it on another. Condor runs on a number of operating systems including Solaris and Linux. It neither supports multithreaded programs nor does it have freely available source code.

libckp was developed at AT&T Bell Laboratories to checkpoint Unix processes [16]. In contrast with libckpt, Condor and our own checkpointing library,

libckp saves files along with the checkpoint to guarantee they will be the same when the program recovers from a checkpoint. Saving copies of all open files guarantees all the files will exist during recovery and allows libckp to handle arbitrary file I/O access patterns, but it can make the checkpoint much bigger. Many scientific programs do not need the extra guarantees if the user is willing to retain the input and output files and the application only writes to files in sequential order. libckp also does not support multithreaded programs.

Process hijacking uses dynamic executable rewriting to add checkpointing to programs that were not compiled with checkpointing support [19]. Process hijacking does not support multithreaded processes.

MOSIX and epckpt provide kernel-level checkpointing solutions. MOSIX is a set of kernel extensions which have been ported to BSD and Linux [4, 3]. MOSIX uses a kernel module to provide transparent load balancing and process migration, epckpt is a Linux kernel patch that adds support for processes and process groups [1]. It is in an early stage of development and requires patching, recompiling, and installing a new kernel. Neither MOSIX nor epckpt work for multithreaded programs.

Process migration in general [11, 18] is related to checkpointing. Several process migration facilities, like Condor and MOSIX, use checkpointing to provide process migration. In the case of process migration a process is transported through space to another machine. In checkpointing the process is transported to a later time on the same or a different machine. The difference is that a process may recover from a checkpoint at a later time when the environment has changed. Resources the original process was using may be unavailable when it recovers.

Checkpointing for distributed message passing systems has been heavily studied [8]. Most message passing algorithms work to reduce synchronization overhead and handle in-transit messages. Synchronization overhead and in-transit messages are not issues for multithreaded processes.

The LinuxHA project [2] is bringing support for high availability to Linux. LinuxHA's failure detection mechanisms could be used with our library to automatically restart programs. Most of the LinuxHA work is focused on replicating processes on different machines for fault-tolerance. Replication can offer better guaranteed bounds on recovery time, but usually requires a duplicate machines to take over for each replicated process when a machine fails. Checkpointing only needs extra machines when a machine fails, and then only enough to replace the failed machines. The program can wait until the the failed machines are repaired if no machines are available and the application can tolerate the delay.

The IEEE Portable Application Services Committee (PASC) 1003.1m Checkpointing Restart working group has been developing a standard API for checkpointing [5].

### 3 Features

The checkpointing library we introduce here allows, for the first time, LinuxThreads programs to automatically be checkpointed. In addition to checkpointing multi-threaded programs our checkpointing library provides features that help meet our goals of being simple to use, flexible, and efficient.

Adding checkpointing support to a C program is straightforward with our checkpointing library. The application programmer only needs to add one line to include the checkpoint header file:

```
 #include "checkpoint.h"
```

and one line to call checkpoint initialization in main.

```
 checkpoint_init(&argc, argv, NULL);
```

checkpoint-init initializes data structures the checkpointing library uses to track thread and file state. Passing argc and argv to checkpoint-init allows the checkpointing library to read options from the command line. The user can control the checkpoint period by passing optional command line arguments to the checkpointing library. The checkpointing library reads all the arguments after the "--" argument. For example,

```
 % prog - - -t period
```

runs the *prog* program with a checkpoint period of *period* seconds. A checkpoint period of 0 disables checkpointing. The user can also pass options to the checkpointing library by putting the options in the CHKPTOPTS environment variable. The programmer can set checkpointing options directly using third argument to checkpoint-init.

Checkpoints are automatically stored in *prog*. chkpt . *n* where *prog* is the name of the program and *n* is the checkpoint number. The user can change the default checkpoint base name with the -b option.

To recover from a checkpoint, the user runs the program with the recovery option and specifies a checkpoint file. For example,

```
                                         % prog - - -r prog. chkpt. n
```

runs the *prog* program, loading the state from the checkpointing file *prog.* chkpt . *n.*

An application program can install callback functions to save any state not saved by the checkpointing library. For example, we have used callback functions to help add checkpointing to the Unify distributed shared memory system [9]. Unify processes communicate through UDP sockets, but the checkpointing library does not save their state. To make checkpointing work, Unify makes sure checkpoints are consistent and uses a recovery callback function to reopen the UDP sockets when it recovers from a failure.

A process can install callback functions that will be called before a checkpoint, after a checkpoint, and after recovering from a checkpoint. chkpt_callback_push installs three functions: a *pre-checkpoint* callback called before each checkpoint, but after all application threads have been stopped, a *post-checkpoint* callback called after the checkpoint, but before any application thread has been restarted, and a *post-recovery* callback called after recovering from a checkpoint.

Pushing a new set of callback functions does not remove any of the old ones. Instead they are pushed onto a stack. The most recently pushed pre-checkpoint callback function is called last. The most recently pushed post-checkpoint and post-recovery callback functions are called first. The program can remove callback functions in any order using the ID returned by chkpt_callback_push. The pushing and popping mechanism simplifies installing and removing callbacks to handle different kinds of state as a program enters different phases.

Our checkpointing library provides memory exclusion similar to that provided by libckpt [12]. Memory exclusion allows the application to specify regions of memory that need not be saved in the checkpoint. Excluding large areas of memory that the application does not need reduces the size of the checkpoint.

### 4 Implementation

The difficulty of checkpointing multithreaded programs comes from making sure that the thread library is in a useful state after recovering from a checkpoint. Threads must be carefully restarted in the correct order to match the way they were originally created.

The basic idea behind our checkpointing library is simple. During initialization the *main thread,* the only thread that exists when the program starts, starts the *checkpoint thread.* After initializing itself, the checkpoint thread blocks with a timed wait on a condition variable. When the timer expires or when another thread calls checkpoint_now the checkpoint thread starts a checkpoint. The checkpoint thread is also responsible for running application callback functions.

To take a checkpoint, the checkpointing library blocks all threads, except the main thread, to prevent any threads from changing the process's state while it is being saved. The main thread then saves the process's state and unblocks all the remaining threads.

To recover from a checkpoint, the checkpointing library restarts the threads that were running at the time of the checkpoint. The restarted threads block while the main thread loads the process's state from a checkpoint. Then the main thread unblocks the other threads and they continue running from the checkpoint. Section 4.1 and Section 4.2 describe the algorithm in more detail.

The difficulty comes from doing everything in the correct order, making sure threads do not try to change the address space while it is being saved, and making sure the process's idea of its state matches the operating system's idea of the state. For example the thread library keeps track of the process IDs of all the threads. The checkpointing library must be able to update the thread library's copies of the thread process IDs.

The process state saved in a checkpoint includes the address space, thread registers, thread library state, signal handlers, and open file descriptors. The checkpointing library cannot save every part of the program's state. The unsaved parts lead to the restrictions described in Section 5.

A process's address space is made up of several segments. These segments include the code segment, data segment, heap, stack segment, code and data segments for each of the shared libraries linked with the program, and thread stacks. The checkpointing library uses the /proc(4) file system interface to find the segments that are mapped into memory.

### 4.1 Saving a Checkpoint

Figure 1 shows how the checkpointing library takes a checkpoint. 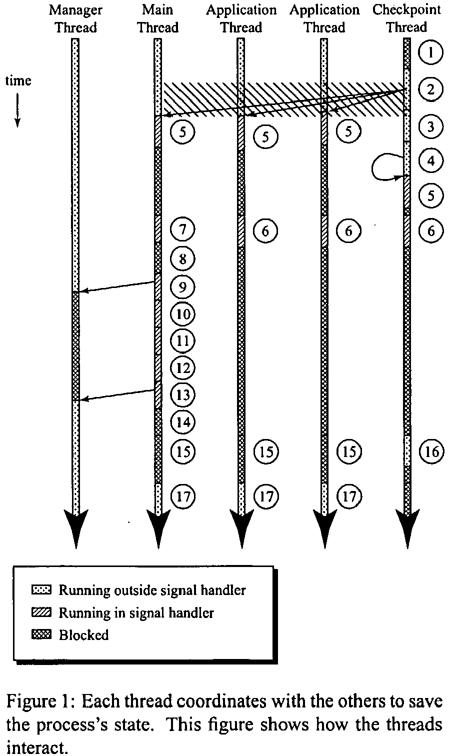
**1. Checkpoint thread unblocks.** The checkpoint starts when either the checkpoint thread's timed wait expires or an application thread calls checkpoint_now.
**2. Send a signal to application threads.** To start a checkpoint, the checkpoint thread sends a signal to each of the application threads. Unlike Solaris, when a thread in Linux receives a signal it enters the signal handler for the signal regardless of the state of the mutex associated with the condition variable [7].
**3. Call pre-checkpoint callbacks.** The checkpoint thread calls the pre-checkpoint callbacks.
**4. Send a signal to the checkpoint thread.** For symmetry the checkpoint thread sends a signal to itself to force itself into its signal handler like all the other threads.
**5. Block signals and wait.** Once in the signal handler every thread blocks all signals and waits at a barrier for the rest of the threads to enter the signal handler.
**6. Save private thread state.** When all threads have entered the signal handler, each thread, except the main thread (and the manager thread), saves its context to memory by calling sigsetjmp(3). Each thread, except the main thread, then blocks at another barrier.
**7. Save signal handlers.** The main thread saves the process's signal handlers using sigaction(2).
**8. Wait for other threads.** The main thread waits until all the other threads have called sigsetjmp(3) and reached the barrier.
**9. Stop the manger thread.** The checkpoint thread cannot send a signal to the manager thread when it is signalling all the other threads in step 2 because the manager thread has no thread ID. Instead the main thread sends a message to the pipe the manager thread normally uses to communicate with other threads. When the manager thread receives the message it blocks until the main thread unblocks it.
**10. Save main thread stack environment.**The main thread calls sigsetjmp(3) to save its stack environment.
**11. Save file state** Once the other threads have reached the barrier the main thread saves the current file pointer for all open regular files.
**12. Save address space.** The main thread saves the entire address space to the checkpoint file.
**13. Unblock Manager Thread.** The main thread unblocks the manager thread.
**14. Wait at barrier.** The main thread waits at the same barrier as the other threads causing all threads to continue.
**15. Wait at barrier.** After leaving the barrier all threads except the checkpoint thread and manager thread wait at another barrier.
**16. Run post-checkpoint callbacks.** The checkpoint thread runs all registered post-checkpoint callback functions while the rest of the threads wait at the barrier.
**17. Resume execution.** Finally, the checkpoint thread joins the barrier and all the threads leave the barrier, restore their signal mask, and return from the signal handler.

### 4.2 Restoring From a Saved Checkpoint

When a program recovers from a checkpoint it starts out as a single threaded program. During initialization, the checkpoint library restores the program's state as shown in Figure 2.
**1. Restart threads.** The main thread opens the checkpoint file, reads the saved thread table, and restarts a new thread for each thread in the original program. The thread library automatically creates the manager thread when the checkpointing library creates the first thread.
**2. Restore thread stacks.** The main thread waits while the child threads restore their stack pointers. Each thread restores its stack by calling siglongjmp(3) which causes the thread to return from the sigsetjmp(3) call it made when it saved its state in the checkpoint. The threads move their stack pointers before the main thread loads the address space because the act of moving them needs to use local variables, which would corrupt the stacks if they were loaded first.
**3. Wait for the main thread.** The child threads wait at a barrier for the main thread to finish restoring the program's state.
**4. Get thread ID to process ID mapping.** After starting all the threads, the main thread calls pthread_chkpt_restart to get the new thread ID to process ID mapping. The main thread copies the mapping into an area of memory that will not be overwritten when the main thread restores the address space. pthread_chkpt_restart also sends a message to the manager thread telling it to call siglongjmp(3) and block so it will be prepared for its stack to be restored. 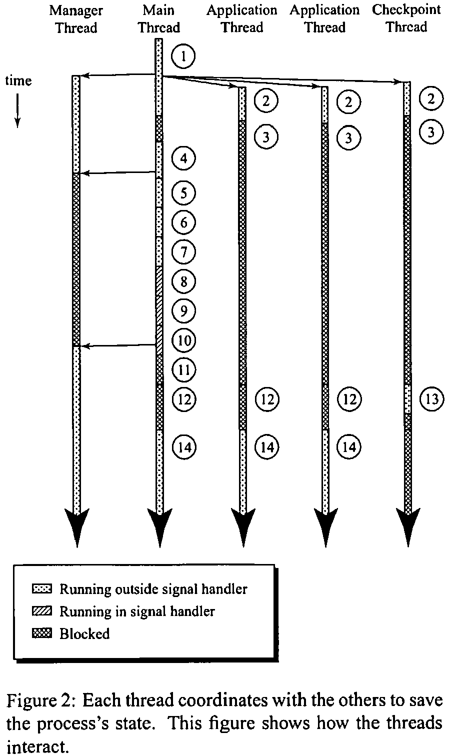
**5. Load main thread stack.** Once all of the child threads and the manager thread have blocked, the main thread restores its own stack pointer. The main thread stack is not necessarily as large as it was when the the program saved the checkpoint. Therefore the main thread recursively calls a function until the its stack is as large as it was when it saved the checkpoint. The main thread can tell when its stack is large enough by comparing the address of a local variable to the address of a local variable when it saved its state.
**6. Remap the process's address space** The main thread then maps every segment except the main thread stack into the program's address space from the checkpoint file using mmap(2) similar to the method Condor uses [10]. The checkpointing library uses mmap(2) to remap segments because mmap(2) does not cause the data to be loaded immediately. The operating system demand loads the contents of the segments when the program accesses them.
**7. Restore signal handlers.** The main thread restores the signal handlers with sigaction(2).
**8. Restore main thread stack pointer** The main thread calls siglongjmp(3) to continue execution where the program was when it saved the checkpoint.
**9. Restore file state** The main thread opens all the files that were open during the checkpoint and moves the file pointer to its position at the time of the checkpoint.
**10. Restore thread ID to process ID mapping.** Next the main thread restores the thread ID to process ID mapping and unblocks the manager thread by calling pthread_chkpt_postrestart.
**11. Wait at barrier.** The main thread waits at the same barrier as the other threads causing all threads to continue.
**12. Wait at barrier.** After leaving the barrier all threads except the checkpoint thread wait at another barrier.
**13. Run post-checkpoint callbacks.** The checkpoint thread runs all registered post-checkpoint callback functions while the rest of the threads wait at the barrier.
**14. Resume execution.** Finally, the checkpoint thread joins the barrier and all the threads leave the barrier, restore their signal mask, and return from the signal handler.

### 4.3 Intercepting Library Functions

The checkpointing library takes advantage of dynamic linking to intercept some library function calls and system calls so it can track the program's state. The checkpointing library intercepts library functions by providing an *intercepting function* with the same name as the library function. The checkpointing library calls dlsym(3) with the RTLD_NEXT option during initialization to get the addresses of all the intercepted library functions so the intercepting function can call the system version of the function. This method works for system calls as well as library functions because the code to setup and make system calls is part of the C library.

For example, when the application calls pthread_create(3), it gets the checkpointing library's version. The checkpointing library records the parameters passed to pthread_create(3) so it can use them during recovery. Then it calls the system pthread_create(3) using the address it got from dlsym(3) during initialization. If the pthread_create(3) call is successful, the checkpointing library updates the number of running threads and returns. Otherwise, it cleans up its thread table and passes the error on to the application program.

### 4.4 Handling Open File Descriptors

The checkpointing library uses an array that mirrors the kernel's file descriptor table to save the state of open files in each checkpoint. To re-open the files during recovery the checkpointing library needs the filename, mode, and current offset into each open file. When the process opens a file with open(2) the checkpointing library adds an entry in its table for that file descriptor with the filename and mode. If the process calls dup(2) or dup2(2) the checkpointing library links the new file descriptor information to the old file descriptor information. When the process closes the file descriptor its entry is removed from the checkpointing library's file descriptor table. The read(2) and write(2) system calls are not intercepted.

When the process takes a checkpoint the checkpointing library saves the current file pointer of every regular file. When the process recovers from a checkpoint it uses the information in the checkpointing library's file descriptor table to re-open files and seek the file pointer to the position at the time of the checkpoint.

The checkpointing library intercepts the popen(2) call to keep track of pipes that are open. During recovery the checkpointing library reopens pipes to replace those that existed at the time of the checkpoint. However, the checkpointing library does not keep track of data read from or written to the pipe, so data buffered in the kernel may be lost. It also does not handle processes outside the main process. The pipe support is only useful if two threads in the same process share a pipe.

### 4.5 Linux Specific Issues

Implementing checkpointing for LinuxThreads programs is simpler than for Solaris because LinuxThreads is simpler than the Solaris pthread library. The Solaris kernel treats threads, lightweight processes (LWPs), and processes as different entities. Handling the interactions between threads and LWPs in Solaris is complex. In addition Solaris adds some rules about when a process can handle a signal that complicate the checkpointing library [6].

The Linux kernel is less complex than Solaris because the Linux kernel does not distinguish between threads and processes. LinuxThreads creates threads with clone(2) a generalized version of fork(2). Like fork(2), clone(2) creates a new process, but clone(2) allows the caller to specify which resources the new process shares with its parent and which resources the new process copies from its parent. Thus threads in a LinuxThreads program are separate processes that happen to share an address space and file descriptors with all other threads.

We had to modify the LinuxThreads library to handle two different problems. First, the thread library stores a mapping from thread IDs to process IDs in its data segment. When the checkpointing library reloads the process's address space from a checkpoint, the thread ID to process ID mapping is restored to the mapping at the time of the checkpoint, which is out of date for the restored process. To handle this problem the checkpointing library must make sure reloading address space from the checkpoint does not wipe out the thread ID to process ID mapping. After it restarts threads but before it restores the address space, the checkpointing library saves the thread ID to process ID mapping in a region of memory that will not be reloaded from the checkpoint. The checkpointing library corrects the thread ID to process ID mapping after it restores the process's address space.

Second, the thread library uses a *manager thread* to create processes. When a thread creates a new thread it sends a message to the manager thread through a pipe and the manager thread creates the new thread. The checkpointing library coordinates with the manager thread during checkpoints to save the manager thread's private state.

The checkpointing library adds four functions to the thread library to handle its interactions with the thread library. The checkpointing library calls pthread_chkpt_precreate before it saves the process's address space. pthread_chkpt_precreate sends the manager thread a message telling it a checkpoint is beginning. The manager thread saves its environment by calling sigsetjmp(3) and blocks. The checkpointing library unblocks the manager thread by calling pthread_chkpt_postcreate after saving the checkpoint.

When restoring a process from a checkpoint, the checkpointing library calls pthread_chkpt_prerestart to get a copy of the thread ID to process ID mapping and to send a message to the manager thread telling it to call siglongjmp(3) and block. The thread library saves the thread ID to process ID mapping in memory that will not be overwritten when the address space is restored. After restoring the address space, the checkpointing library calls pthread_chkpt_postrestart to restore the thread ID to process ID mapping and unblocks the manager thread. The pthread_chkpt_ calls are the only added entry points to the thread library.

### 5 Restrictions

Our checkpointing library supports programs that access regular files sequentially or use signal handlers for signals. At least one signal must be available for the checkpointing library. The checkpointing library cannot restore process IDs and it does not support programs that randomly access files or communicate with other processes. In most cases, however, the application programmer can add recovery code in callback functions to recover the file or communication state. For example, we are using the checkpointing library to add checkpointing to the Unify distributed shared memory system [9].

Random access reads do not present a problem as long as the program never writes to the file. General random access files are difficult to handle because the checkpointing library must be able to roll the file back during recovery to the state it was in during the checkpoint. One simple way to do this is to save the entire file with the checkpoint [16]. Saving could increase the checkpoint size a lot if the program uses a lot of large files. The checkpointing library could avoid some of the overhead by not saving files opened with mode O_RDONLY. Assuming the files do not change between when they are opened and when the program finishes using them.

The other alternative for handling random access files would be to log each change made to the file. During recovery the checkpointing library could undo all changes made since the last checkpoint. The disadvantage of logging changes is that it adds overhead to log every write operation and the log grows with each write between checkpoints. We did not want to add this overhead when our applications want to use sequential access files. We could reduce overhead by only logging files that are open with mode O_RDWR. In our current implementation, an application writer who wants to save random access files with a checkpoint could write a callback routine to manually save the desired files during a checkpoint.

POSIX threads (and LinuxThreads) do not provide a way to create a thread with a particular thread ID. The checkpointing library assumes that the thread library always assigns thread IDs in the same order. As long as that assumption is true, the checkpointing library can guarantee each thread has the same thread ID after recovering by creating threads in the order in which they were originally created. Currently our checkpointing library does not handle programs with threads that exit before the end of the program. If a thread exits early, the thread created immediately after the thread that exited early will get the exited thread's ID during recovery. This problem could be fixed during recovery by creating a thread that exits immediately in place of the exited thread to use up the exited thread's ID. Alternatively we could modify the thread library to allow programs to request particular thread IDs, but we wanted to minimize the changes to the thread library to make it easier to work with different versions of the thread library. The applications we work with create all the threads they need at the start and the threads keep running until the program exits so it was not a problem for our applications.

During recovery, described in section 4.2, the checkpointing library restarts all the threads and restores the process's entire address space from a checkpoint, including the thread library data segment. The checkpointing library assumes that the thread library will function correctly with the newly created threads and the thread data structures from before the checkpoint. This assumption is not entirely true in Linux and thus the thread library must be modified as described in section 4.5.

The checkpointing library interrupts each thread with a signal to start a checkpoint. When the checkpointing library installs its signal handler, it passes SA_RESTART flag to sigaction(2) to tell the Linux kernel to restart interrupted system calls if possible. The application code must restart system calls that the Linux kernel cannot restart.

We added nothing extra to support thread cancellation functions. The problem with thread cancellation is recreating the threads with the correct thread IDs as described above. Otherwise the checkpointing library would just need minor adjustments to cleanup the canceled thread after its last cancellation handler is called.

We also did nothing special to support thread scheduling priorities. Handling thread scheduling priorities would be a matter of logging the calls to the thread scheduling priority calls and reissuing them to restore scheduling priorities during recovery. Support may be added if there is demand.

The checkpointing library does not handle interprocess communication, but it does reopen pipes open at the time of a checkpoint. It cannot make another process use either end of the pipe it opens, and it does not save any data buffered in the kernel. Thus pipes will only be restored if they are used between threads in the same process and no data is buffered in the pipe at the time of the checkpoint.

Handling IPC, either between processes on the same machine or on different machines, is difficult in general. Both processes must agree on when they take checkpoints or make assumptions about how deterministic they are to avoid inconsistent checkpoints. Otherwise one process could fail and recover from a checkpoint that rolls it back to a state in which it has not sent a message on which another process depends. At that point the program is in a state which it could not have reached without a failure. The second process is in a state that causally depends on a state that never happened, as far as the first process is concerned. In that case the two processes are said to be *inconsistent.* Issues of consistency have been well studied and are beyond the scope of this paper [8]. Extending our checkpointing library to work for a general case with multiple processes communicating with pipes or TCP sockets would be non-trivial.

The checkpointing library does not intercept or modify time related system calls in any way. A program that uses absolute time values may behave strangely after recovering from a checkpoint. For example, assume a thread blocks using pthread_cond_timedwait(3) to wait for several seconds and the process checkpoints while the thread is blocked. The process is killed and restarts from the checkpoint several minutes later. After recovery, the thread will immediately unblock because the timer has expired.

Strictly speaking this behavior is correct because the current time is later than the time for which the thread was waiting. Applications that have time based events, however, might get a flood of expired timers when recovering from a checkpoint. We could intercept all calls that have anything to do with absolute time and adjust the time they see after recovering from a checkpoint, but some programs need to know what the absolute time really is. Instead we leave it up to the application programmer to write a callback function to adjust any time values that need to be adjusted after recovering from a checkpoint.

### 6 Results

The checkpointing library adds overhead due to intercepting calls, overhead due to the checkpointing thread, and overhead due to saving checkpoints. The checkpointing library only intercepts thread creation, file open, and file close calls. Unless the program opens and closes files often or creates and destroys threads often that overhead will be low. The checkpointing thread does not add much overhead because it is blocked except during checkpointing.

### 6.1 Applications

To verify that checkpointing adds little overhead when it is not writing a checkpoint, we ran several applications from the SPLASH2 [17] benchmark suite. SPLASH2 is a set of benchmarks designed to test the performance parallel shared memory machines. The benchmarks are based on applications and kernels commonly used in scientific computing. We present the results of running the BARNES and WATER-SPATIAL benchmarks below. The other SPLASH2 benchmarks we ran gave similar results.

BARNES simulates the gravitational effects of a number of bodies in space using the Barnes-Hut algorithm. It uses a tree to represent the locations of the bodies in space. WATER-SPATIAL simulates the the interaction of water particles using a 3 dimensional grid. We increased the problem sizes of both applications from the size used in the original SPLASH2 paper [17] to increase the running time of the benchmarks. For WATER-SPATIAL we increased the number of particles to 8000 instead of 512. For BARNES we used 65536 particles instead of 16384.

The test machine was a two processor 500 MHz Pentium III SMP machine with 512 KB L2 cache and 128 MB of main memory running Linux kernel version 2.2.10 with NFS v2 and glibc2. The file systems mounted for the NFS tests were served by an UltraSPARC-10 running Solaris 5.7. The network over which the NFS disk was mounted was a moderately used 100 Mb/s switched Ethernet connected by a Cisco Catalyst 2924 XL auto-sensing 10/100 Mb/s switch. None of the machines used in the test shared a port on the switch with any other machine.

Table 1 compares running each of the benchmarks with and without checkpointing linked for one and two processors. With checkpointing linked, the program called the checkpoint initialization code, but did not take any checkpoints. This test shows how much overhead checkpointing adds not including the time to save the checkpoint to disk. Table 1 shows that the checkpointing library does not add much overhead when the program is not checkpointing. This overhead is important because the program will spend most of its time running, not checkpointing.

In some cases, code with checkpointing linked but not used runs faster than without checkpointing. Changes in the program's memory layout cause this speedup. Linking the benchmark with unused code gave the same effect as linking with the checkpointing library.

Table 2 shows the amount of time BARNES and WATER-SPATIAL spend taking a checkpoint using a local disk or an NFS mounted disk. Most of the time is spent saving the checkpoint to a file. These numbers are intended to give a feel for how long it takes for application programs to checkpoint and how the checkpointing time is spent. In both the local disk and the NFS disk cases the amount of time spent synchronizing threads before and after the checkpoint is several orders of magnitude smaller than the amount of time spent saving the checkpoint to disk. Saving the checkpoint to disk is the largest overhead of checkpointing.

### 6.2 Checkpoint Size

The size of the checkpoint file is directly proportional to the size of the process's address space. Most of the overhead of taking a checkpoint comes from writing the address space to disk. Figure 3 gives an idea how long a program will take to save a checkpoint depending the size of the checkpoint and whether it is saving to a local disk or an NFS mounted disk.

The amount of time required to save the checkpoint depends on the file system to which it is saved. The figure shows times for local disk and NFS. Writing a checkpoint to an NFS mounted disk¹ takes much longer than writing to a local disk. The figure also shows that the amount of time required to save a checkpoint is directly proportional to the size of the checkpoint.
¹The disk with mounted with rsize=8192,wsize=8192.

In this case, the time required to save a checkpoint to the NFS mounted disk can be approximated by the equation *t_{cp}* = 2.37sec/MB × *s* - 0.60sec for checkpoints larger than about 1.3 MB, where s is the size of checkpoint in MB. The user can use *t_{cp}* to decide which checkpoint interval to use. A simple method is to calculate the maximum percentage of execution time taken by checkpointing given *t_{cp}* and the maximum address space size (checkpoint size) of the program. More sophisticated methods can determine the checkpoint interval that will minimize the program's expected run time given *t_{cp}* and a particular failure rate [13,15].

### 7 Conclusion

Our checkpointing library provides checkpointing for multithreaded Linux programs. It adds little overhead except when taking a checkpoint. The overhead that it does add is directly proportional to the size of the address space. Saving the checkpoint to local disk is much faster than saving it to an NFS mounted disk.

Our checkpointing library combines simplicity for many programs that meet its restrictions, but enough flexibility that other programs can use it without too much extra work. Callback function provide flexibility for applications that have special needs. Features like memory exclusion and user directed checkpointing can reduce overhead when taking a checkpoint. We are considering adding incremental and asynchronous checkpointing to further reduce the overhead of saving a checkpoint.

**Table 1: This table gives execution times of several SPLASH2 applications. For the "Not Linked" case, the application was run without the checkpointing library linked to it. In the "Linked" case, the checkpointing library was linked to the application, but it did not take any checkpoints. This case measures checkpointing overhead outside not directly related to taking checkpoints. All times are in seconds.**

| | *1 Processor* | | | *2 Processors* | | |
|---|---|---|---|---|---|---|
| *Benchmark* | Not Linked (seconds) | Linked (seconds) | Overhead (percent) | Not Linked (seconds) | Linked (seconds) | Overhead (percent) |
| BARNES | 53 | 53 | 0 | 32 | 31 | -3.1 |
| WATER-SPATIAL | 666 | 678 | 1.8 | 335 | 340 | 1.5 |

**Table 2: This table lists the time required to save checkpoints for several SPLASH2 applications. "Total Time" is the total amount of time to take a checkpoint. "Save Time" is the amount of time required to save the checkpoint to a file. "Sync Time" is the amount of time required for processes to synchronize before and after the checkpoint. All times are in seconds on a run with 2 Processors.**

| | *Local Disk* | | | *NFS* | | |
|---|---|---|---|---|---|---|
| *Benchmark* | Total Time (seconds) | Save Time (seconds) | Sync Time (seconds) | Total Time (seconds) | Save Time (seconds) | Sync Time (seconds) |
| BARNES | 9.8351 | 9.8330 | 0.0021 | 337.1552 | 337.1536 | 0.0017 |
| WATER-SPATIAL | 0.0736 | 0.0716 | 0.0020 | 16.3965 | 16.2361 | 0.1604 |

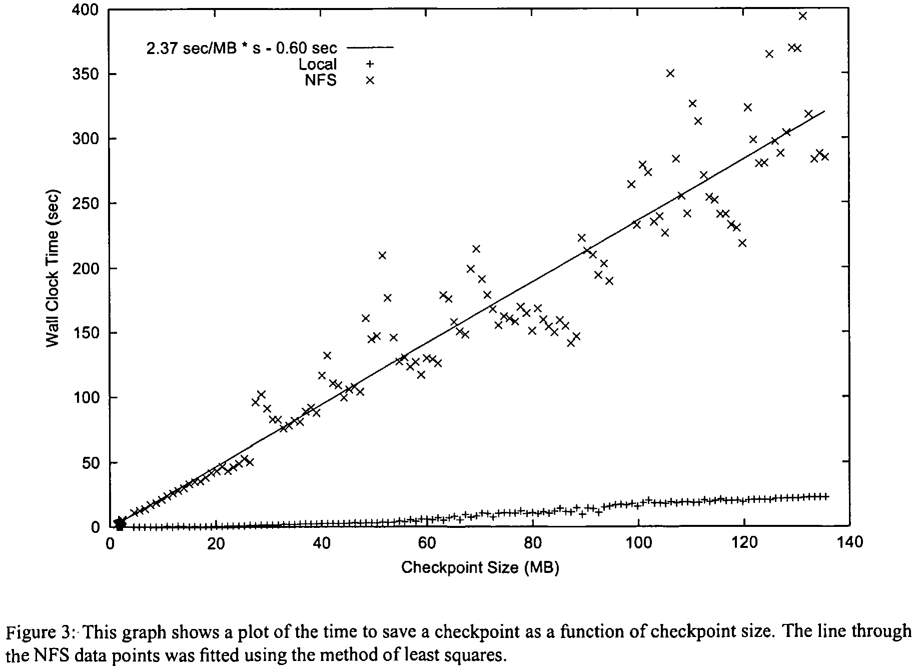

The latest version of the checkpointing library is available through our web site at:
http://www.dcs.uky.edu/^{∼}chkpt

### References

[1] EPCKPT: Eduardo Pinheiro Checkpoint Project Website. Technical report, http://www.cs.rochester.edu/u/edpin/epckpt/.
[2] High-Availability Linux Project Website. Technical report, http://www.linux-ha.org/.
[3] Amnon Barak, Oren La-adan, and Amnon Shiloh. Scalable cluster computing with MOSIX for LINUX. In Proceedings of Linux Expo '99, pages 95-100, May 1999.
[4] Amnon Barak and Aren La'adan. The MOSIX multicomputer operating system for high performance cluster computing. Journal of Future Generation Computer Systems, 13(4-5):361-372, March 1998.
[5] Portable Application Standards Committee. Draft Standard for Information Technology - Portable Operating System Interface (POSIX) Part 1: System Application Program Interface (API) -Amendment m: Checkpoint/Restart Interface. IEEE Computer Society, p1003.1m/d2 edition.
[6] William R. Dieter and James E. Lumpp, Jr. A user-level checkpointing library for POSIX threads programs. In Proceedings of the International Symposium on Fault-Tolerant Computing, pages 224-227, June 1999.
[7] William R. Dieter and James E. Lumpp, Jr. User-level checkpointing of posix threads. Technical Report CEG-99-004, University of Kentucky, Department of Electrical Engineering, Lexington, KY 40506-0046, http://www.dcs.uky.edu/∼chkpt, 1999.
[8] Mootaz Elnozahy, Lorenzo Alvisi, Yi-Min Wang, and Davaid B. Johnson. A survey of rollback-recovery protocols in message-passing systems. Technical Report CMU-CS-99-148, Carnegie Mellon University, http://www.cs.utexas.edu/users/ lorenzo/papers/Pap6.ps, June 1999.
[9] James Griffioen, Rajendra Yavatkar, and Raphael Finkel. Unify: A scalable approach to multicomputer design. IEEE Computer Society Bulletin of the Technical Committee on Operating Systems and Application Environments, 7(2), 1995.
[10] Michael Litzkow, Todd Tannenbaum, Jim Basney, and Miron Livny. Checkpoint and migration of unix processes in the condor distributed processing system. Technical Report 1346, University of Wisconsin-Madison Computer Science, April 1997.
[11] Dejan S. Milojiči 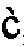 , Fred Douglis, Yves Paindaveine, Richard Wheeler, and Songnian Zhou. Process migration survey. *ACM Computing Surveys*, pages 241-299, September 2000.
[12] James S. Plank, Micah Beck, Gerry Kingsley, and Kai Li. Libckpt: Transparent checkpointing under Unix. In USENIX Winter 1995 Technical Conference, January 1995.
[13] James S. Plank and Wael R. Elwasif. Experimental assessment of workstation failures and their impact on checkpointing systems. In Proceedings of the International Symposium on Fault-Tolerant Computing, pages 48-57, June 1998.
[14] Todd Tannenbaum and Michael Litzkow. Checkpointing and migration of unix processes in the condor distributed processing system. Dr. Dobbs Journal, pages 40-48,102, February 1995.
[15] Nitin H. Vaidya. Impact of checkpoint latency on overhead ratio of a checkpointing scheme. IEEE Transactions on Computers, pages 942-947, August 1997.
[16] Yi-Min Wang, Yennun Huang, Kiem-Phong Vo, Pi-Yu Chung, and Chandra Kintala. Checkpointing and its applications. In Proceedings of the International Symposium on Fault-Tolerant Computing, pages 22-31, June 1995.
[17] Steven Cameron Woo, Moriyoshi Ohara, Evan Torrie, Jaswinder Pal Singh, and Anoop Gupta. The splash-2 programs: Characterization and methodological considerations. In Proceedings of the International Symposium on Computer Architecture, pages 24-36, June 1995.
[18] Roman Zajcew, Paul Roy, David Black, Chris Peak, Paulo Guedes, Bradford Kemp, John LoVerso, Michael Leibensperger, Michael Barnett, Faramarz Rabii, and Durriya Netterwala. An OSF/1 Unix for massively parallel multicomputers. In USENIX Winter 1993 Technical Conference, pages 449-468, January 1993.
[19] Victor C. Zandy, Barton P. Miller, and Miron Livny. Process hijacking. In Proceedings of the IEEE International Symposium on High Performance Distributed Computing, pages 177-184, August 1999.

## Claims

1. A method of checkpointing an object, process or other component of an application program, the method comprising:
creating (26) at least one incremental checkpoint;
creating (22) at least one full checkpoint;
wherein incremental checkpointing is implemented in user space;
wherein incremental checkpointing comprises page-boundary memory checkpointing;
wherein checkpointing is carried out using a device driver, whereby no modification of the operating system kernel is required;
**characterized in that** the method further comprises:
asynchronously merging (28) at least one said incremental checkpoint and at least one said full checkpoint at a checkpoint storage location; and
reconnecting kernel pointers for shared files between parent and child processes after restoring from a checkpoint using the device driver, whereby operating system kernel modification is not required.

2. A method as recited in claim 1, further comprising performing barrier synchronization of incremental and full checkpoints using system semaphores.

3. A method as recited in claim 1, further comprising capturing the state of waiting queues using kernel-level interception of system calls.

4. A method as recited in claim 3, wherein said interception is implemented in a kernel module in a multiprocessing environment or without a kernel module in a single processing environment.

5. A method as recited in claim 1, further comprising: synchronizing a storage checkpoint with a memory checkpoint at the time a checkpoint is saved; wherein each memory checkpoint has a corresponding storage checkpoint.

6. A method as recited in claim 1, further comprising: providing a template which defines one or more processes to be protected by checkpointing and which provides for selective restoration.

7. A method as recited in claim 1, further comprising capturing the state of interprocess communication via pipes, FIFOs, and sockets using the device driver, whereby operating system kernel modification is not required.

8. A method as recited in claim 1, further comprising capturing process memory map state using the device driver, whereby operating system kernel modification is not required.

9. A method as recited in claim 7 or 8, wherein said device driver is implemented as a loadable kernel module in a multiprocessing environment.

10. A system for checkpointing an object, process or other component of an application program, **characterized in that** the system comprises:
means for full memory checkpointing;
means for incremental memory checkpointing; wherein at least said incremental checkpointing is implemented in user space;
wherein at least said incremental checkpointing comprises page-boundary memory checkpointing;
wherein checkpointing is carried out using a device driver, whereby no modification of the operating system kernel is required
**characterized in that** the system comprises;
means for asynchronous merging of incremental checkpoints with full checkpoints at a checkpoint storage location; and
means for reconnecting kernel pointers for shared files between parent and child processes after restoring from a checkpoint using the device driver, whereby operating system kernel modification is not required.

11. A system as recited in claim 10, further comprising means for performing barrier synchronization of incremental and full checkpoints using system semaphores.

12. A system as recited in claim 10, further comprising means for capturing the state of waiting queues using kernel-level interception of system calls.

13. A system as recited in claim 12, wherein said interception is implemented in a kernel module in a multiprocessing environment or without a kernel module in a single processing environment.

14. A system as recited in claim 10, further comprising: means for synchronizing a storage checkpoint with a memory checkpoint at the time a checkpoint is saved; wherein each memory checkpoint has a corresponding storage checkpoint.

15. A system as recited in claim 10, further comprising means for capturing the state of inter-process communication via pipes, FIFOs, and sockets using the device driver, whereby operating system kernel modification is not required.

16. A system as recited in claim 10, further comprising means for capturing process memory map state using the device driver, whereby operating system kernel modification is not required.

17. A system as recited in claim 15 or 16, wherein said device driver is implemented as a loadable kernel module in a multiprocessing environment.

18. A system as recited in claim 10, further comprising means for defining one or more processes to be protected by checkpointing and which provides for selective restoration.

19. A checkpointing computer program, comprising a set of instructions stored on a media accessible by a computer and executable on said computer, wherein said computer program performs the method of any of claims 1-9.

## Patentansprüche

1. Ein Verfahren zum Checkpointing eines Objekts, Prozesses oder einer anderen Komponente eines Anwendungsprogramms, wobei das Verfahren umfasst:
Erzeugen (26) mindestens eines inkrementellen Checkpoints;
Erzeugen (22) mindestens eines vollständigen Checkpoints;
wobei das inkrementelle Checkpointing im Benutzerbereich implementiert ist;
wobei das inkrementelle Checkpointing das seitenweise Checkpointing des Speichers umfasst;
wobei das Checkpointing unter Verwendung eines Gerätetreibers durchgeführt wird, wodurch keine Änderung des Betriebssystemkernels erforderlich ist;
**dadurch gekennzeichnet, dass** das Verfahren ferner umfasst:
asynchrones Zusammenführen (28) mindestens eines der inkrementellen Checkpoints und mindestens eines der vollständigen Checkpoints an einem Checkpoint-Speicherort; und
Wiederverbinden von Kernel-Zeigern für gemeinsam genutzte Dateien zwischen Eltern- und Kindprozessen nach der Wiederherstellung aus einem Checkpoint mit Hilfe des Gerätetreibers, wobei eine Änderung des Betriebssystemkernels nicht erforderlich ist.

2. Ein Verfahren nach Anspruch 1, ferner umfassend das Durchführen der Barriere-Synchronisation von inkrementellen und vollständigen Checkpoints unter Verwendung von Systemsemaphoren .

3. Ein Verfahren nach Anspruch 1, ferner umfassend das Erfassen des Zustands von Warteschlangen unter Verwendung des Abfangens von Systemaufrufen auf Kernel-Ebene.

4. Ein Verfahren nach Anspruch 3, wobei das Abfangen in einem Kernel-Modul in einer Multiprozessorumgebung oder ohne Kernel-Modul in einer Einzelprozessorumgebung implementiert ist.

5. Ein Verfahren nach Anspruch 1, ferner umfassend: Synchronisieren eines Speicher-Checkpoints mit einem Speicher-Checkpoint zum Zeitpunkt des Speicherns eines Checkpoints; wobei jeder Speicher-Checkpoint einen entsprechenden Lager-Checkpoint aufweist.

6. Ein Verfahren nach Anspruch 1, ferner umfassend: Bereitstellen einer Vorlage, die einen oder mehrere Prozesse definiert, die durch Checkpointing zu schützen sind, und die eine selektive Wiederherstellung ermöglichen.

7. Ein Verfahren nach Anspruch 1, ferner umfassend das Erfassen des Zustands der Interprozesskommunikation über Pipes, FIFOs und Sockets unter Verwendung des Gerätetreibers, wobei eine Änderung des Betriebssystemkernels nicht erforderlich ist.

8. Ein Verfahren nach Anspruch 1, ferner umfassend das Erfassen des Zustands der Prozessspeicherabbildung unter Verwendung des Gerätetreibers, wobei eine Änderung des Betriebssystemkernels nicht erforderlich ist.

9. Ein Verfahren nach Anspruch 7 oder 8, wobei der Gerätetreiber als ladbares Kernel-Modul in einer Multiprozessorumgebung implementiert ist.

10. Ein System zum Checkpointing eines Objekts, Prozesses oder einer anderen Komponente eines Anwendungsprogramms, **dadurch gekennzeichnet, dass** das System umfasst:
Mittel für das vollständige Speicher-Checkpointing;
Mittel für das inkrementelle Speicher-Checkpointing; wobei mindestens das inkrementelle Checkpointing im Benutzerbereich implementiert ist;
wobei mindestens das inkrementelle Checkpointing das seitenweise Checkpointing des Speichers umfasst;
wobei das Checkpointing unter Verwendung eines Gerätetreibers durchgeführt wird, wodurch keine Änderung des Betriebssystemkernels erforderlich ist;
**dadurch gekennzeichnet, dass** das System umfasst;
Mittel für das asynchrones Zusammenführen von inkrementellen Checkpoints mit vollständigen Checkpoints an einem Checkpoint-Speicherort; und
Mittel für das Wiederverbinden von Kernel-Zeigern für gemeinsam genutzte Dateien zwischen Eltern- und Kindprozessen nach der Wiederherstellung aus einem Checkpoint mit Hilfe des Gerätetreibers, wobei eine Änderung des Betriebssystemkernels nicht erforderlich ist.

11. Ein System nach Anspruch 10, ferner umfassend Mittel für das Durchführen der Barriere-Synchronisation von inkrementellen und vollständigen Checkpoints unter Verwendung von Systemsemaphoren.

12. Ein System nach Anspruch 10, ferner umfassend Mittel für das Erfassen des Zustands von Warteschlangen unter Verwendung des Abfangens von Systemaufrufen auf Kernel-Ebene.

13. Ein System nach Anspruch 12, wobei das Abfangen in einem Kernel-Modul in einer Multiprozessorumgebung oder ohne Kernel-Modul in einer Einzelprozessorumgebung implementiert ist.

14. Ein System nach Anspruch 10, ferner umfassend: Mittel für das Synchronisieren eines Speicher-Checkpoints mit einem Speicher-Checkpoint zum Zeitpunkt des Speicherns eines Checkpoints; wobei jeder Speicher-Checkpoint einen entsprechenden Lager-Checkpoint aufweist.

15. Ein System nach Anspruch 10, ferner umfassend Mittel für das Erfassen des Zustands der Interprozesskommunikation über Pipes, FIFOs und Sockets unter Verwendung des Gerätetreibers, wobei eine Änderung des Betriebssystemkernels nicht erforderlich ist.

16. Ein System nach Anspruch 10, ferner umfassend Mittel für das Erfassen des Zustands der Prozessspeicherabbildung unter Verwendung des Gerätetreibers, wobei eine Änderung des Betriebssystemkernels nicht erforderlich ist.

17. Ein System nach Anspruch 15 oder 16, wobei der Gerätetreiber als ladbares Kernel-Modul in einer Multiprozessorumgebung implementiert ist.

18. Ein System nach Anspruch 10, ferner umfassend Mittel für die Definition eines oder mehrerer Prozesse, die durch Checkpointing zu schützen sind, und die eine selektive Wiederherstellung ermöglichen.

19. Ein Checkpoint-Computerprogramm, umfassend einen Satz von Anweisungen, die auf einem Medium gespeichert sind, auf das ein Computer zugreifen kann und das auf dem Computer ausführbar ist, wobei das Computerprogramm das Verfahren nach einem der Ansprüche 1 bis 9 durchführt.

## Revendications

1. Procédé de vérification d'un objet, processus ou autre composant d'un programme d'application, le procédé comprenant :
la création (26) de au moins un point de contrôle incrémentiel ;
la création (22) de au moins un point de contrôle complet ;
dans lequel une vérification incrémentielle est implémentée dans un espace utilisateur ;
dans lequel une vérification incrémentielle comprend une vérification de mémoire de limite de page ;
dans lequel la vérification est effectuée en utilisant un pilote de périphérique, de sorte qu'aucune modification du noyau de système d'exploitation n'est requise ;
**caractérisé en ce que** le procédé comprend en outre :
la fusion asynchrone (28) dudit au moins un point de contrôle incrémentiel et dudit au moins un point de contrôle complet à un emplacement de stockage de points de contrôle ; et
la reconnexion de pointeurs de noyau pour des fichiers partagés entre des processus parent et enfant après restauration à partir d'un point de contrôle en utilisant le pilote de périphérique, de sorte que modification du noyau de système d'exploitation n'est pas requise.

2. Procédé selon la revendication 1, comprenant en outre l'exécution d'une synchronisation de barrière de points de contrôle incrémentiels et complets en utilisant des sémaphores de système.

3. Procédé selon la revendication 1, comprenant en outre la capture de l'état de files d'attente en attente en utilisant une interception de niveau noyau d'appels de système.

4. Procédé selon la revendication 3, dans lequel ladite interception est implémentée dans un module de noyau dans un environnement de multitraitement ou sans module de noyau dans un environnement de traitement unique.

5. Procédé selon la revendication 1, comprenant en outre : la synchronisation d'un point de contrôle de stockage avec un point de contrôle de mémoire au moment où un point de contrôle est sauvegardé ; dans lequel chaque point de contrôle de mémoire a un point de contrôle de stockage correspondant.

6. Procédé selon la revendication 1, comprenant en outre : la fourniture d'un modèle qui définit un ou plusieurs processus à protéger par vérification et qui prévoit une restauration sélective.

7. Procédé selon la revendication 1, comprenant en outre la capture de l'état d'une communication interprocessus via des canaux, des FIFO, et des sockets en utilisant le pilote de périphérique, de sorte qu'une modification du noyau de système d'exploitation n'est pas nécessaire.

8. Procédé selon la revendication 1, comprenant la capture d'un état de mappage de mémoire de processus en utilisant le pilote de périphérique, de sorte qu'une modification du noyau de système d'exploitation n'est pas nécessaire.

9. Procédé selon la revendication 7 ou 8, dans lequel ledit pilote de périphérique est implémenté sous la forme d'un module de noyau chargeable dans un environnement de multitraitement.

10. Système de vérification d'un objet, processus ou autre composant d'un programme d'application, **caractérisé en ce que** le système comprend :
des moyens pour une vérification complète de mémoire ;
des moyens pour une vérification incrémentielle de mémoire ; dans lequel au moins ladite vérification incrémentielle est implémentée dans un espace utilisateur ;
dans lequel au moins ladite vérification incrémentielle comprend une vérification de mémoire de limite de page ;
dans lequel une vérification est effectuée en utilisant un pilote de périphérique, de sorte qu'aucune modification du noyau de système d'exploitation n'est requise
**caractérisé en ce que** le système comprend ;
des moyens pour une fusion asynchrone de points de contrôle incrémentiels avec des points de contrôle complets à un emplacement de stockage de points de contrôle ; et
des moyens pour une reconnexion de pointeurs de noyau pour des fichiers partagés entre des processus parent et enfant après restauration à partir d'un point de contrôle en utilisant le pilote de périphérique, de sorte qu'une modification du noyau de système d'exploitation n'est pas nécessaire.

11. Système selon la revendication 10, comprenant en outre des moyens pour effectuer une synchronisation de barrière de points de contrôle incrémentiels et complets en utilisant des sémaphores de système.

12. Système selon la revendication 10, comprenant en outre des moyens pour capturer l'état de files d'attente en attente en utilisant une interception de niveau noyau d'appels de système.

13. Système selon la revendication 12, dans lequel ladite interception est implémentée dans un module de noyau dans un environnement de multitraitement ou sans module de noyau dans un environnement de traitement unique.

14. Système selon la revendication 10, comprenant en outre : des moyens pour synchroniser un point de contrôle de stockage avec un point de contrôle de mémoire au moment où un point de contrôle est sauvegardé ; dans lequel chaque point de contrôle de mémoire a un point de contrôle de stockage correspondant.

15. Système selon la revendication 10, comprenant en outre des moyens pour capturer l'état d'une communication inter-processus via des canaux, des FIFO, et des sockets en utilisant le pilote de périphérique, de sorte qu'une modification du noyau de système d'exploitation n'est pas nécessaire.

16. Système selon la revendication 10, comprenant en outre des moyens pour capturer l'état de mappage de mémoire de processus en utilisant le pilote de périphérique, de sorte qu'une modification du noyau de système d'exploitation n'est pas nécessaire.

17. Système selon la revendication 15 ou 16, dans lequel ledit pilote de périphérique est implémenté sous la forme d'un module de noyau chargeable dans un environnement de multitraitement.

18. Système selon la revendication 10, comprenant en outre des moyens pour définir un ou plusieurs processus à protéger par vérification et qui prévoient une restauration sélective.

19. Programme informatique de vérification, comprenant un ensemble d'instructions stockées sur un support accessible par un ordinateur et exécutables sur ledit ordinateur, dans lequel ledit programme informatique effectue le procédé selon l'une quelconque des revendications 1 à 9.
